(19) Europäisches Patentamt
European Patent Office
Office européen des brevets

(11) **EP 4 554 118 A1**

(12) **EUROPEAN PATENT APPLICATION**

(43) Date of publication:
14.05.2025 Bulletin 2025/20

(21) Application number: 23208401.2

(22) Date of filing: 07.11.2023

(51) International Patent Classification (IPC):
*H04B 10/80* (2013.01)　　　*H04Q 11/00* (2006.01)

(52) Cooperative Patent Classification (CPC):
**H04B 10/801; H04Q 11/0005;** H04Q 2011/0047

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ecole Polytechnique Fédérale de
Lausanne (EPFL)
1015 Lausanne (CH)**

(72) Inventors:
• DINÇ, Niyazi Ulas
**1025 ST-SULPICE (CH)**
• YILDIRIM, Mustafa
**1022 CHAVANNES-RENENS (CH)**
• PSALTIS, Demetri
**1028 PREVERENGES (CH)**
• MOSER, Christophe
**1007 LAUSANNE (CH)**

(74) Representative: **reuteler & cie SA
Chemin de la Vuarpillière 29
1260 Nyon (CH)**

(54) **OPTICAL INTERCONNECTION DEVICE**

(57)　　An optical interconnection device (1) comprising a plurality of input/output ports (2) comprising a plurality of receiving ports (2a) and a plurality of transmitting ports (2b), a light routing system (4) comprising at least one spatial light modulator (10) and a control system (20), wherein the optical interconnection device (1) is configurable to receive optical signals from the plurality of receiving ports (2a) and transmit said optical signals to the plurality of transmitting ports (2b) according to a target set of interconnections, wherein the control system (20) is configured to generate a plurality of modulation patches (11) on the at least one spatial light modulator (10), wherein the plurality of modulation patches (11) are configured to impose spatial modulations on light beams (19) received by the receiving ports for routing said light beams (19) from the receiving ports (2a) to the transmitting ports (2b), thereby creating an interconnection or a plurality of interconnections from at least one of the receiving ports (2a) to at least one of the transmitting ports (2b) according to the target set of interconnections.

**FIG 4**

Light beam routing by succesive wavefront shaping

EP 4 554 118 A1

**Description**

The present invention relates to optical interconnection devices for routing optical signals, in particular to optical fiber interconnection devices for routing optical signals in or between data centers, backbone networks, or similar communication networks.

Over the past few decades, large-scale data centers have been instrumental in the development of global Internet services. As machine learning has gained importance, the need for large-scale, distributed computing capabilities in data centers has increased. Data center networking enables interconnectivity to carry out the workloads required for these services. While industrial practices have relied on electrical packet switching with fiber optic cables between nodes for data routing, the incorporation of multifunctional optical interconnects into the network architecture has the potential to recast network design. Optical interconnects have several benefits over electrical ones, including independence from data rate resulting in interoperability with different generations of electronic devices, low latency, and energy efficiency. Integrating optical interconnects with bandwidth-intensive and latency-sensitive applications, such as machine learning training, can significantly improve latency, and bandwidth efficiency with lower costs.

One of the existing optical interconnect technologies is based on optical circuit switches with microelectromechanical systems (MEMS) mirrors. While these switches can provide energy-efficient optical routing, they cannot multicast single input to many output channels. This arises from the ray-optic characteristics when using millimeter-sized, two-axis continuously rotating mirrors or the binary modulation characteristics when utilizing digital Micromirror devices. Moreover, these known systems are not wavelength sensitive, only satisfying space granularity. In addition, their scalability is restricted due to the physical constraints of the MEMS mirrors. Another approach is based on volume holographic optical elements. However, these elements suffer from low power efficiency for a large port number, which makes them unsuitable for industrial applications. Optical mode multiplexing is another technique that has been proposed to increase the throughput of optical interconnects. However, its scalability and stability are still being researched and developed. Fixed interconnect methods, such as printed diffractive layers, waveguides, or 3D optical structures, overcome the power efficiency of volume holographic methods that use optical means for recording. However, these approaches are not programmable, which limits their flexibility and functionality.

Wavelength-selective switches (WSSs) are devices capable of redirecting optical signals to different output ports based on their wavelengths. These switches typically consist of a one-dimensional (1D) diffraction grating and a beam-steering mechanism. The diffraction grating disperses the optical signals into their constituent wavelengths, while the beam-steering mechanism directs them to specific output ports based on their wavelengths. In many WSSs, Liquid-Crystal-on-Silicon (LCoS) spatial light modulators are commonly utilized as the beam-steering element. However, a limitation of WSSs is that they can only redirect one input signal to one output port at a time. Consequently, WSSs are unsuitable for multicasting, which involves transmitting the same signal to multiple output ports simultaneously. To overcome this limitation, a common approach involves adding a separate passive splitter to the WSS. By combining the splitter with the WSS, the system can switch input to multiple spatial and spectral output channels, enabling multicasting. However, this solution has its drawbacks, primarily due to the 1D nature of the WSS and the exponential power drop caused by the passive splitters, which limits the scalability of the switch.

In view of the foregoing, it is an object of the invention to provide an optical interconnection device which is reconfigurable and capable of performing multicasting and wavelength-selective routing of optical signals. It is also an object of the invention to provide a method of setting a topology of a communication network.

It is advantageous to provide an optical interconnection device which is reliable.

It is advantageous to provide an optical interconnection device which is compact.

It is advantageous to provide an optical interconnection device which is has a small number of components.

It is advantageous to provide an optical interconnection device which is energy-efficient.

It is advantageous to provide an optical interconnection device which has a low latency.

It is advantageous to provide an optical interconnection device which is economical to produce.

It is advantageous to provide an optical interconnection device which has a good scalability, i.e., a relatively low increase of the complexity with the number of receiving and transmitting ports or the maximum number of interconnections between receiving and transmitting ports.

Objects of the invention have been achieved by providing an optical interconnection device according to claim 1 and a method of setting a topology of a communication network according to claim 15.

Dependent claims set out various advantageous features of embodiments of the invention.

Disclosed herein is an optical interconnection device comprising a plurality of input/output ports comprising a plurality of receiving ports and a plurality of transmitting ports, a light routing system comprising at least one spatial light modulator and a control system. The optical interconnection device is configurable to receive optical signals from the plurality of receiving ports and transmit said optical signals to the plurality of transmitting ports according to a target set of interconnections. The control system is configured to generate a plurality of modulation patches on the at least one spatial light modulator. The plurality of modulation patches are configured to impose spatial modulations on light beams received by the receiving ports for routing said light beams from the receiving ports to the transmitting ports, thereby creating an interconnection or a plurality of interconnections from at least one of the receiving ports to at least one of the transmitting ports according to the target set of interconnections.

In an advantageous embodiment, the target set of interconnections comprises at least one interconnection selected from

- a unicast interconnection routing optical signals of any wavelength channel from any single receiving port to any single transmitting port, and/or
- a multicast interconnection routing optical signals of any wavelength channel from any single receiving port to any plurality of transmitting ports.

In an advantageous embodiment, the spatial modulations include phase modulations, amplitude modulations and/or polarization modulations.

In an advantageous embodiment, the at least one spatial light modulator is at least one liquid crystal spatial light modulator or at least one phase-change material-based spatial light modulator.

In an advantageous embodiment, the optical interconnection device is connectable to optical fibers and configurable to transfer optical signals between the connected optical fibers through the input/output ports according to the target set of interconnections.

In an advantageous embodiment, the plurality of input/output ports are spatially distributed in at least one two-dimensional pattern.

In an advantageous embodiment, the input/output ports are spatially non-overlapping or formed by orthogonal spatial mode profiles.

In an advantageous embodiment, the optical interconnection device further comprises a linear or nonlinear optical medium or vacuum, and the light routing system is configured to route light beams from the receiving ports to the transmitting ports such that the light beams propagate through the linear or nonlinear optical medium or vacuum between spatial modulations by the modulation patches.

In an advantageous embodiment, the light routing system comprises a multi-bounce cavity formed

- by two mirrors, wherein the plurality of modulation patches are arranged to extend in a single common plane between the two mirrors and configured to operate in transmission;
- by a single mirror and the plurality of modulation patches arranged to extend in a single common plane facing the mirror and configured to operate in reflection; or
- the plurality of modulation patches arranged to extend in two common parallel planes and configured to operate in reflection.

In an advantageous embodiment, the multi-bounce cavity is configured to bounce the light beams propagating from the receiving ports to the transmitting ports between

- the two mirrors;
- the single mirror and the plurality of modulation patches arranged to extend in a single common plane; or
- the plurality of modulation patches arranged to extend in two common parallel planes, respectively.

In an advantageous embodiment, at least one interconnection is a bidirectional interconnection for bidirectionally transferring optical signals between two input/output ports using light beams routed by spatial modulations imposed by the plurality of modulation patches on the light beams.

In an advantageous embodiment, the control system further comprises a feedback system comprising a light source and a photodetector. The light source is configured to emit probe light and the feedback system is configured to measure a feedback parameter related to the at least one spatial light modulator based on probe light modulated by the at least one spatial light modulator and detected with the photodetector. The control system is configured to provide a feedback loop for adapting the modulation patches using the feedback parameter.

In an advantageous embodiment, the control system comprises a control interface configured to receive commands from a network controller to configure or reconfigure the interconnection or the plurality of interconnections of the target set of interconnections, and the control system is configured to generate a plurality of modulation patches implementing said commands to configure or reconfigure the interconnection or the plurality of interconnections of the target set of interconnections.

In an advantageous embodiment, the control system is configured to determine a status of the optical interconnection device based on the feedback parameter and send said status to the network controller via the control interface.

Also disclosed herein is a method of setting a topology of a communication network comprising:

- providing an optical interconnection device according to any of the two directly preceding claims,
- connecting said optical interconnection device to a plurality of information processing systems such as electrical interconnects, optical interconnects, computers, and/or servers via optical fibers,
- connecting said optical interconnection device to a network controller via the control interface,
- receiving via the control interface commands from the network controller to configure or reconfigure the interconnection or the plurality of interconnections of the target set of interconnections, and
- generating by the control system a plurality of modulation patches implementing said commands to configure or reconfigure the interconnection or the plurality of interconnections of the target set of interconnections.

In an advantageous embodiment, the method further comprises measuring a feedback parameter related to the at least one spatial light modulator and adapting the modulation patches in a feedback loop using the feedback parameter.

In an advantageous embodiment, the method further comprises determining by the control system a status of the optical interconnection device based on the feedback parameter and sending said status to the network controller via the control interface.

The optical interconnection device and method of the present invention employ wavefront shaping using reconfigurable spatial light modulators for efficient light routing. The optical paths are controlled to obtain a target set of interconnections from receiving ports to transmitting ports, which may include bidirectional interconnections between two input/output ports by subsequent spatial modulations of light using different techniques in different embodiments of the invention. The reconfigurability of the spatial light modulators enables changing the target mapping of the light routing on-demand yielding a reconfigurable network topology. The optical interconnection device of the present invention may be abbreviated using the acronym ROSSMi, which stands for Reconfigurable Optical Spatial-Spectral Multicast interconnect.

By providing space-wavelength granularity, i.e., the capability of routing of optical signals depending on the spatial and spectral distribution of the input light beams, the present invention also addresses scalability issues of optical interconnect solutions of the prior art.

The optical interconnection device and method of the present invention is suitable for a wide range of applications and hardware configurations, e.g., the optical interconnection device may accept different types of optical fibers or it can be made or optimized for any type of optical fiber and it may be used for any network topology.

Further advantageous features of the invention will be apparent from the following detailed description of embodiments of the invention and the accompanying illustrations.

**Brief description of the figures**

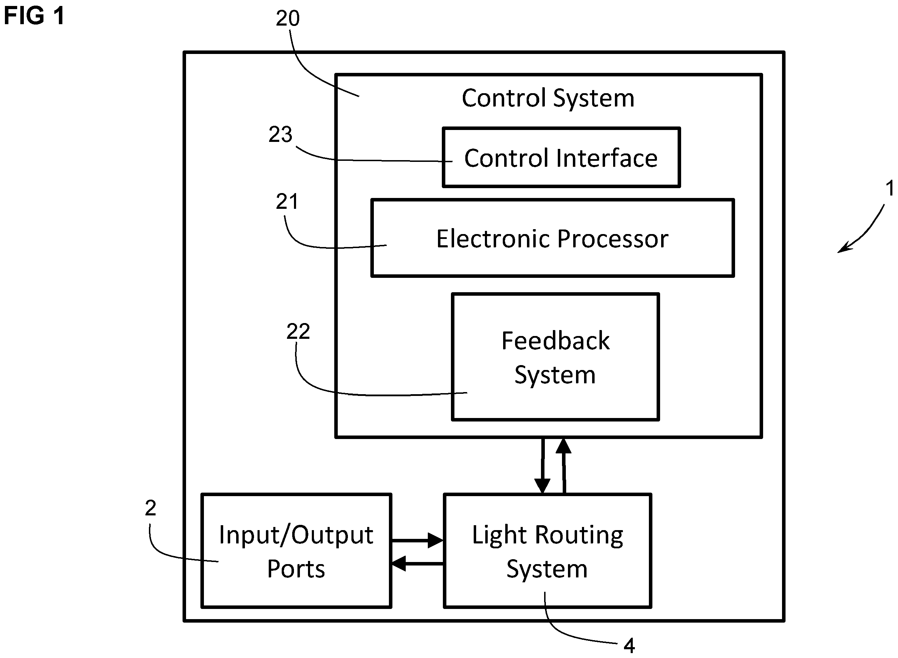

Figure 1 is a schematic diagram of an optical interconnection device according to an embodiment of the invention;

Figure 2 is a schematic perspective view of an optical interconnection device according to an embodiment of the invention;

Figure 3 are schematic views of an optical interconnection device according to an embodiment of the invention illustrating unicast and multicast interconnections without separation of wavelength channels ("spatial granularity", left panel) and with separation of wavelength channels ("space-spectral granularity", right panel);

Figure 4 is a schematic view of an optical interconnection device according to an embodiment of the invention with a collinear geometry, i.e., with modulation layers are located on parallel planes;

Figure 5 is a schematic view of an optical interconnection device according to an embodiment of the invention with four modulation patches displayed on a single spatial light modulator (top panel: side view, bottom panel: view facing the SLM);

Figure 6 is a schematic view of an optical interconnection device according to an embodiment of the invention with four modulation patches displayed on two spatial light modulators (top panel: side view, bottom panel: view facing the SLM);

Figure 7 is a schematic view of a monolithic implementation of an optical interconnection device according to an embodiment of the invention with a reflective spatial light modulator, a transparent solid medium such as glass, and a mirror forming a multi-bounce cavity for routing light beams from receiving ports to transmitting ports by spatially modulating the light beams with the spatial light modulator multiple times;

Figure 8 is a schematic view of a monolithic implementation of an optical interconnection device according to an embodiment of the invention comprising two spatial light modulators facing each other, where there is a transparent solid medium such as glass in between, forming a multi-bounce cavity for routing light beams from receiving ports to transmitting ports by spatially modulating the light beams with the spatial light modulators multiple times;

Figure 9 is a schematic view of an optical interconnection device according to an embodiment of the invention with an optically (re-)configurable spatial light modulator formed by a slab of a phase-change material between two mirrors forming a multi-bounce cavity for routing light beams from receiving ports to transmitting ports by spatially modulating the light beams with the spatial light modulator multiple times;

Figure 10 is a schematic view of an optical interconnection device according to an embodiment of the invention with an optically (re-)configurable spatial light modulator formed by a slab of a phase-change material used in reflection and a mirror facing the spatial light modulator forming a multi-bounce cavity for routing light beams from receiving ports to transmitting ports by spatially modulating the light beams with the spatial light modulator multiple times;

Figure 11 is a schematic view of an optical interconnection device according to an embodiment of the invention including a feedback system based on an interferometric signal obtained by the superposition of probe light modulated by the spatial light modulator and unmodulated probe light;

Figure 12 is a schematic view of an optical interconnection device according to an embodiment of the invention including a feedback system based on an inline probe beam emitted from an input/output port (in a dark channel or from a dark port) routed to a photodetector by the spatial light modulator to generate a feedback signal;

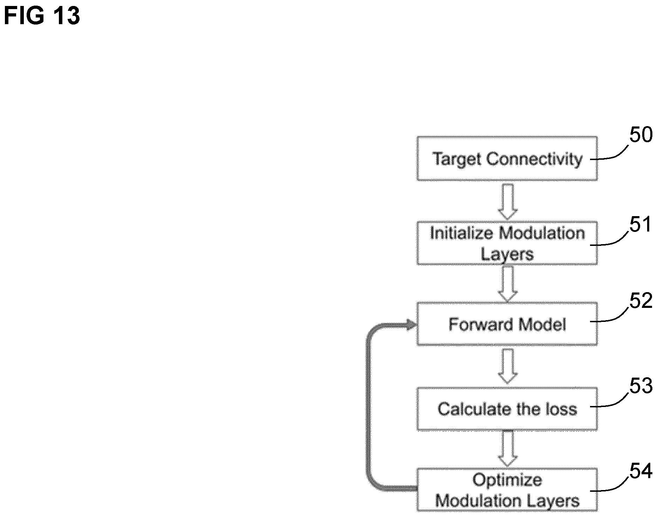

Figure 13 is a flowchart of the calculation of the modulation layers (or modulation patches) for a target connectivity in an optical interconnection device according to an embodiment of the invention;

Figure 14a is a photograph of an optical interconnection device according to an embodiment of the invention in a laboratory environment;

Figure 14b is photograph giving a more detailed view from above the spatial light modulator of the optical interconnection device of figure 14a;

Figure 14c is photograph giving a more detailed view from a side of the spatial light modulator of the optical interconnection device of figure 14a;

Figure 15a shows an example of four modulation patches for unicast interconnections (top panels) on a spatial light modulator of an optical interconnection device according to an embodiment of the invention and two examples of simulated and measured light intensity at the output plane for unicast interconnections (bottom panels);

Figure 15b shows a transmission matrix of the example of four modulation patches for unicast interconnections of figure 15a;

Figure 16 shows an example of four modulation patches for multicast interconnections (top panels) on a spatial light modulator of an optical interconnection device according to an embodiment of the invention and two examples of simulated and measured output beam profiles of unicast interconnections (bottom panels);

Figure 17 shows an example of six modulation patches with spatial-spectral granularity (top panels) on a spatial light modulator of an optical interconnection device according to an embodiment of the invention and obtained interconnectivity results illustrated with the target and simulated output beam profile of a unicast interconnection (middle panels) and the transmission matrix (bottom panels) for each three different wavelengths;

Figure 18 is a schematic illustration of the utilization of an optical interconnection device according to an embodiment of the invention in a data center, where each Top of Rack switch is connected to a single optical interconnection device;

Figure 19 is a schematic illustration of the utilization of an optical interconnection device according to an embodiment of the invention in a data center, where each Top of Rack switch is connected to a plurality of optical interconnection devices for a hitless operation;

Figure 20 is a schematic illustration of a communication network architecture with multiple hierarchical levels of interconnect layers, where an optical interconnection device according to an embodiment of the invention can be utilized in tandem with electronic switches in the interconnect layers depending on the data center operator's choice;

Figure 21 is a workflow of an individual optical interconnection device according to an embodiment of the invention, including the communication to a network controller;

Figure 22 is a depiction of the capability of an optical interconnection device according to an embodiment of the invention to interface different optical telecom technologies;

Figure 23 is a schematic illustration of the use of an optical interconnection device according to an embodiment of the invention in a data center at rack level, i.e., the optical interconnection device provides inter- and intra-rack connections;

Figure 24 is a schematic illustration of the use of an optical interconnection device according to an embodiment of the invention in a data center at server level, i.e., the optical interconnection device provides interconnectivity between the server units that have optical input/output ports as well as their inter-server and inter-rack connectivity.

Referring to the figures, an optical interconnection device 1 according to embodiments of the invention comprises a plurality of input/output ports 2 comprising a plurality of receiving ports 2a and a plurality of transmitting ports 2b, a light routing system 4 comprising at least one spatial light modulator 10 and a control system 20.

In general, a spatial light modulator (SLM) is a device configured to impose a spatially varying modulation on a light beam, i.e., the modulation varies over a two-dimensional beam profile of a light beam. Said spatially varying modulation is a modulation of the amplitude, the phase and/or the polarization of the light beam. The spatial light modulator is configured to vary said spatially varying modulation over time. Said spatially varying modulation is static or quasi-static and reconfigurable in the intended use of the optical interconnection device.

The optical interconnection device according to the invention can be implemented using any type of spatial light modulator, e.g., digital micromirror devices, liquid crystal spatial phase or amplitude modulators, phase-change material (PCM)-based spatial phase and amplitude modulators, photonic crystal spatial light modulators, and photorefractive spatial light modulators.

In a preferred embodiment, the at least one spatial light modulator 10 is a liquid crystal spatial light modulator, in particular a reflective liquid crystal spatial light modulator, e.g., fabricated with liquid crystal on silicon (LCoS) technology. Preferably, the liquid crystal spatial light modulator is a phase only liquid crystal spatial light modulator. The spatial modulation of liquid crystal spatial light modulators is discrete because they comprise a plurality of pixels. Each of the pixels can be electronically configured and reconfigured.

An alternative embodiment uses as a spatial light modulator a slab of a material that can preserve its state passively until it is reconfigured and spatially modulates light according to its state. Typical examples of such materials are phase-change materials. Phase-change materials can be optically configured and reconfigured using a write beam. The obtained spatial variation of the modulation corresponds to the spatial variation of the intensity of the write beam. A write beam with a small beam diameter can be scanned over the PCM slab or a spatially varying intensity profile of a large diameter write illumination generated with a spatially varying transmission mask can be imaged onto the PCM slab. The spatially varying transmission mask may be reconfigurable and generated with an amplitude spatial light modulator, e.g., a liquid crystal spatial light modulator or a digital Micromirror device.

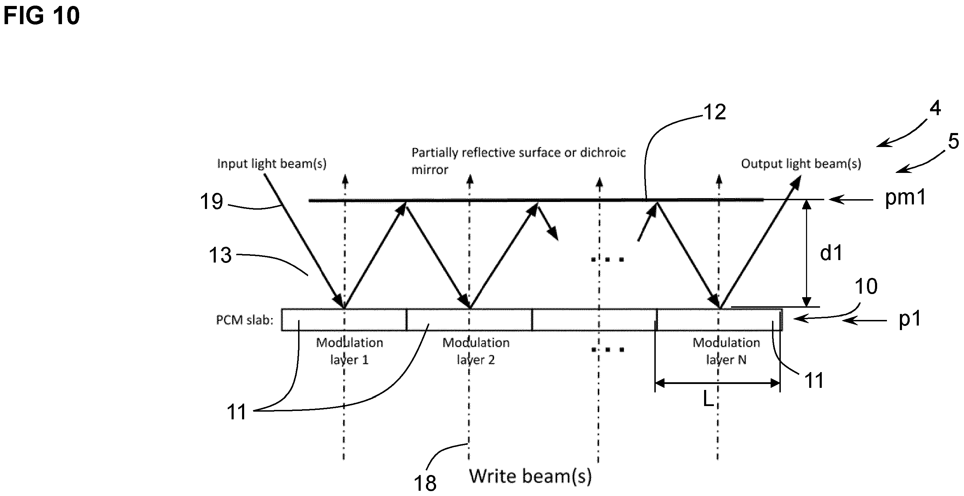

The phase change of a PCM modulates both the absorption coefficient and refractive index of the material. Both the phase and the amplitude of signal beams propagating through the PCM slab are modulated. Alternatively, the signal beams may be reflected from a surface of the PCM slab, which leads to a spatial modulation of the signal beams due to the spatially varying Fresnel reflection coefficient, which depends on the absorption coefficient and refractive index of the material. This eliminates one of the mirrors (see figure 10).

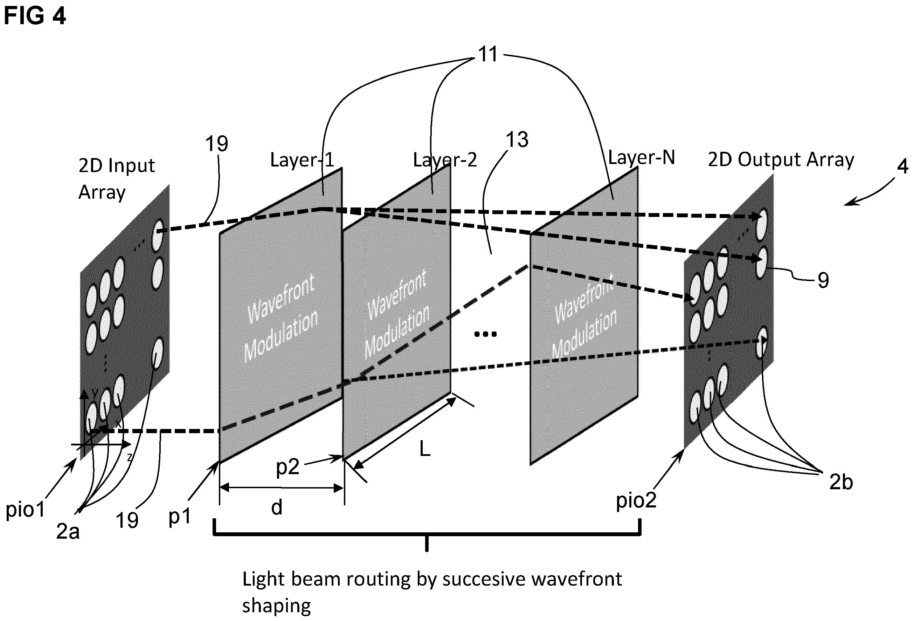

The plurality of input/output ports 2 are spatially distributed in at least one two-dimensional pattern, such as a concentric pattern in which the input/output ports 2 are arranged on one or more circles or a rectangular pattern. Preferably, the input/output ports 2 are spatially non-overlapping. Specifically, the input/output ports 2 define non-overlapping spatial mode profiles 9. For example, the modes of a single-mode fiber array or a multi-core fiber supporting a single mode for each core have spatially non-overlapping mode profiles. The spatial mode profiles 9 schematically illustrated in figure 4 are circular, however, they may have any other shape.

Alternatively, the input/output ports 2 are spatially overlapping. Specifically, the input/output ports 2 define overlapping spatial mode profiles 9. For example, the modes of a multi-mode fiber have spatially overlapping mode profiles. The optical interconnection device according to the invention can also sort spatially overlapping channels such as fiber modes in a multi-mode fiber. While fiber modes of a multimode fiber are spatially overlapping in Cartesian coordinates, they form an orthogonal basis yielding an ability to treat each mode as a separate communication channel. The fiber modes forming an orthogonal basis means that the inner product of the field distributions is zero for different fiber modes: $<E\_mode\_a, E\_mode\_b> = 0$ for different modes mode_a and mode_b, wherein $E\_mode\_a$ and $E\_mode\_b$ is the electric field of the respective modes and $<x, y>$ is the inner product. The optical interconnection device according to the invention can multiplex/demultiplex said channels thanks to its wavefront shaping-based nature, thus providing a framework for future communication systems based on multi-mode fibers.

The plurality of input/output ports 2 may be arranged on two planes pio1, pio2. For example, the plurality of input/output ports 2 are arranged on a rectangular grid forming a first and a second two-dimensional array. The input/output ports 2 define non-overlapping spatial mode profiles 9 on the two planes pio1, pio2. All the receiving ports 2a may be arranged on a first plane pio1 and all the transmitting ports 2b may be arranged on a second plane pio2, for example on a two-dimensional input array and on a two-dimensional output array, respectively. However, it is important to note that receiving and transmitting ports 2b may be mixed on the two planes pio1, pio2, i.e., they may be distributed to both planes, which allows unidirectional interconnection from receiving ports 2a on the first plane pio1 to transmitting ports 2b on the second plane pio2 and between receiving ports 2a on the second plane pio2 to transmitting ports 2b the first plane pio1 as well as bidirectional interconnections between two input/output ports 2 located on both planes pio1, pio2.

The optical interconnection device 1 is configurable to receive optical signals from the plurality of receiving ports 2a and transmit said optical signals to the plurality of transmitting ports 2b according to a target set of interconnections. The control system 20 is configured to generate a plurality of modulation patches 11 on the at least one spatial light modulator 10. The plurality of modulation patches 11 are configured to sequentially impose spatial modulations on light beams 19 received by the receiving ports for routing said light beams 19 from the receiving ports 2a to the transmitting ports 2b, thereby creating an interconnection or a plurality of interconnections from at least one of the receiving ports 2a to at least one of the transmitting ports 2b according to the target set of interconnections.

The target set of interconnections comprises at least one interconnection selected from

- a unicast interconnection routing optical signals of any wavelength channel from any single receiving port 2a to any single transmitting port 2b, and/or
- a multicast interconnection routing optical signals of any wavelength channel from any single receiving port 2a to any plurality of transmitting ports 2b.

The optical signals routed in the optical interconnection device 1 may carry information in amplitude, phase, spatial shape, or frequency of light.

The optical interconnection device 1 is also configurable to switch the entire communication band or sub-bands jointly in unicast or multicast interconnections. Moreover, subgroups of input/output ports 2 may be defined and the optical interconnection device 1 is configurable to switch any subgroup of input/output ports 2 jointly to another subgroup of input/output ports 2 for any wavelength channel.

The target set of interconnections comprises unidirectional and/or bidirectional interconnections. Moreover, the interconnections may include wavelength-selective interconnections selectively routing different wavelength channels from a single receiving port to different transmitting ports 2b and/or space-selective interconnections selectively routing optical signals from different receiving ports 2a to different transmitting ports 2b.

It may be noted that each of the input/output ports 2 can be a receiving port 2a for a certain wavelength channel and a transmitting port 2b for a different wavelength channel.

In preferred embodiments, the optical interconnection device is connectable to optical fibers 30 and configurable to transfer optical signals between the connected optical fibers 30 through the input/output ports 2 according to the target set of interconnections. Preferably, the optical interconnection device 1 comprises connectors for plugging in optical fiber cables. The optical interconnection device 1 is configured to connect a specific type of optical fiber or different types of optical fibers. The suitable type or types of optical fibers may include single-mode fiber, multi-mode fiber, single-mode fiber array, multi-core fiber, few-mode fiber, annular-core fiber, multi-core fiber supporting few modes.

The optical interconnection device 1 is configurable to provide unidirectional and bidirectional interconnections between optical fibers 30 connected to the optical interconnection device 1. In a unidirectional interconnection, optical signals can be transferred in one direction from an optical fiber to another optical fiber. In a bidirectional interconnection, optical signals can be transferred in both directions between two optical fibers.

Some types of optical fibers comprise multiple spatial modes such as multi-mode fibers, in particular multiple independent spatial modes such as multi-core fibers. These optical fibers support space-division multiplexing (SDM), which is an analogy to wavelength-division multiplexing (WDM) for dividing the space instead of the spectrum to create separate communication channels, in particular independent communication channels. Of course, these fibers can also support wavelength-division multiplexing. Each of the spatial modes of such an optical fiber 30 corresponds to one of the input/output ports 2 of the optical interconnection device 1.

The optical interconnection device 1 preferably comprises a collimator or a plurality of collimators 3, any other bulk optics and/or a fiber optics component for separating and/or shaping light beams emitted from an end of each optical fiber 30 connected to the optical interconnection device 1 to match a spatial mode profile 9 of one of the input/output ports 2. For example, each of the spatial modes of the connected optical fibers 30 are imaged onto two input/output planes via beam shaping optics, such as a collimator and/or a fiber optics component, such as a multicore fiber fanout connecting a multicore fiber to a plurality of single mode fibers.

In preferred embodiments, the light beams 19 emitted from the receiving ports 2a are collimated using a plurality of collimators 3 such that the beam profiles of the light beams 19 do not overlap at the first modulation patch 11. For the case of multi-mode fibers, each distinct mode can spatially overlap at the first modulation patch as they are spatially overlapping while travelling inside the multi-mode fiber and when they are emitted out of the multi-mode fiber. In such a case, plurality of modulation patches enable the distinct optical path configuration of each mode as a separate channel.

The optical interconnection device 1 according to embodiments of the invention can be used for any type of switching of spatial modes and wavelength channels of each optical fiber 30 connected to the optical interconnection device 1, including the following types:

- Independent spatial mode and wavelength channel switching, which may be abbreviated as "space-wavelength granularity" of the switching. In this type of switching, every spatial mode and every wavelength channel of the optical fiber can be independently switched.
- Spatial mode switching across all wavelength channels, which may be abbreviated as "space granularity" of the switching. In this type of switching, each spatial mode of the optical fiber is switched independent of wavelengths, i.e., the communication band per mode is jointly switched.
- Wavelength switching across all spatial modes, which may be abbreviated as "wavelength granularity" of the switching. In this type of switching, wavelength channels can be individually switched, but all the spatial modes of the optical fiber are jointly switched for a particular wavelength channel.
- Wavelength switching across spatial mode subgroups, which may be abbreviated as "fractional space-full wavelength granularity". In this type of switching, wavelength channels can be individually switched, but subgroups of spatial modes of the optical fiber are jointly switched for a particular wavelength channel.

In other words, the target set of interconnections can comprise interconnections, which correspond to "space-wavelength granularity", "space granularity", "wavelength granularity" or "fractional space-full wavelength granularity" of the switching.

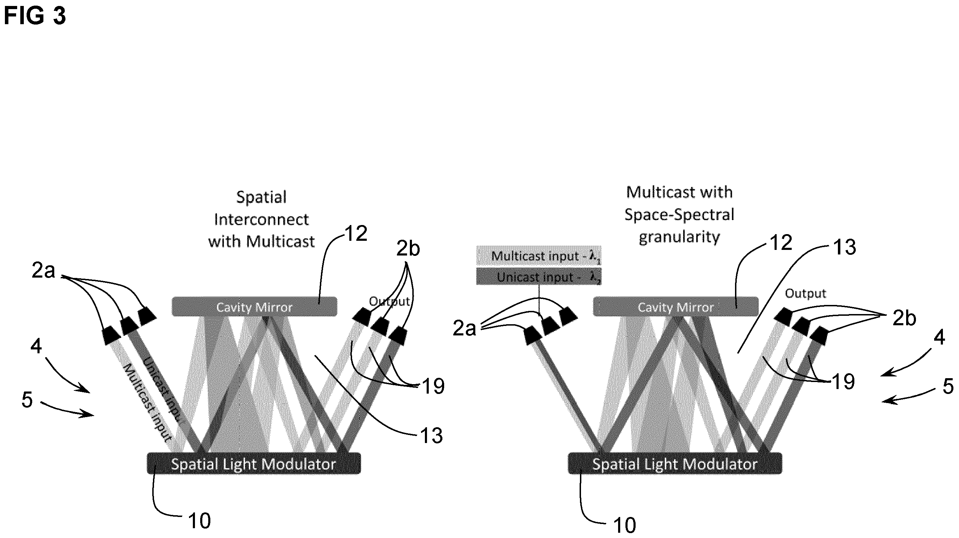

An example of spatial-only switching, in which all wavelength channels of each receiving port is jointly switched to the same transmitting port comprising a unicast and a multicast interconnection is illustrated in the left panel of figure 3. An example of wavelength-selective switching comprising a unicast and a multicast interconnection is illustrated in the right panel of figure 3.

Figure 4 illustrates a configuration of the optical interconnection device 1 according to an embodiment of the invention in which each of the plurality of modulation patches is a modulation layer displayed on a different spatial light modulator 10 operated in transmission and the two-dimensional input and output arrays and all the modulation layers are located on parallel planes pio1, pio2, p1, p2, ....

Each of the modulation patches or layers 11 can perform a spatial modulation on each of the beams emitted from the receiving ports 2a, which can result in:

- Splitting of the beam,
- Deflection of the beam, or
- Shaping of the beam, e.g., refocusing of the beam.

The optical interconnection device 1 of the invention does not need a separate beam splitter for multicasting because the modulation patches can split the beams. It is known in the art how these basic functions can be implemented by modulation patches for different types of spatial light modulators. For example, a beam can be deflected with a diffraction grating and focused with a Fresnel lens and split using different diffraction orders of a diffraction grating. Thus, each possible interconnection between receiving and transmitting ports 2b may be implemented by a combination of the above-mentioned basic functions and free-space propagation between the modulation layers. A more versatile and convenient method for the generation of the plurality of modulation patches for a given target set of interconnections is presented later.

The spatial light modulators may be operated in transmission or in reflection. The spatial light modulator operated in reflection may be configured to modulate light when it is reflected at a surface of a modulation layer. Alternatively, light is modulated when it propagates through a modulation layer of the reflective spatial light modulator, then the light is reflected from a mirror and afterwards the light is modulated once again by the modulation layer as it propagates a second time through the modulation layer.

In advantageous embodiments, all the modulation patches or layers 11 are arranged to extend in a single common plane p1 or two common parallel planes p1, p2. These arrangements have the advantage that two or more modulation patches 11 can be displayed on a single spatial light modulator 10. In some advantageous embodiments, two or more spatial light modulator are arranged in a common plane, each configured to display one or more modulation patches 11.

In advantageous embodiments, the optical interconnection device comprises a spatial light modulator 10 operated in reflection and a mirror facing the spatial light modulator 10 to form a multi-bounce cavity 5 for routing light beams 19 from receiving ports 2a to transmitting ports 2b by spatially modulating the light beams 19 by modulation patches displayed on the spatial light modulator multiple times.

In other advantageous embodiments, two spatial light modulators 10 are operated in reflection and facing each other to form a multi-bounce cavity 5 for routing light beams 19 from receiving ports 2a to transmitting ports 2b by spatially modulating the light beams 19 with the spatial light modulator multiple times.

In other advantageous embodiments, a spatial light modulator 10 is operated in transmission and sandwiched between two mirrors 12, which form a multi-bounce cavity 5 for routing light beams 19 from receiving ports 2a to transmitting ports 2b by spatially modulating the light beams 19 with the spatial light modulator multiple times.

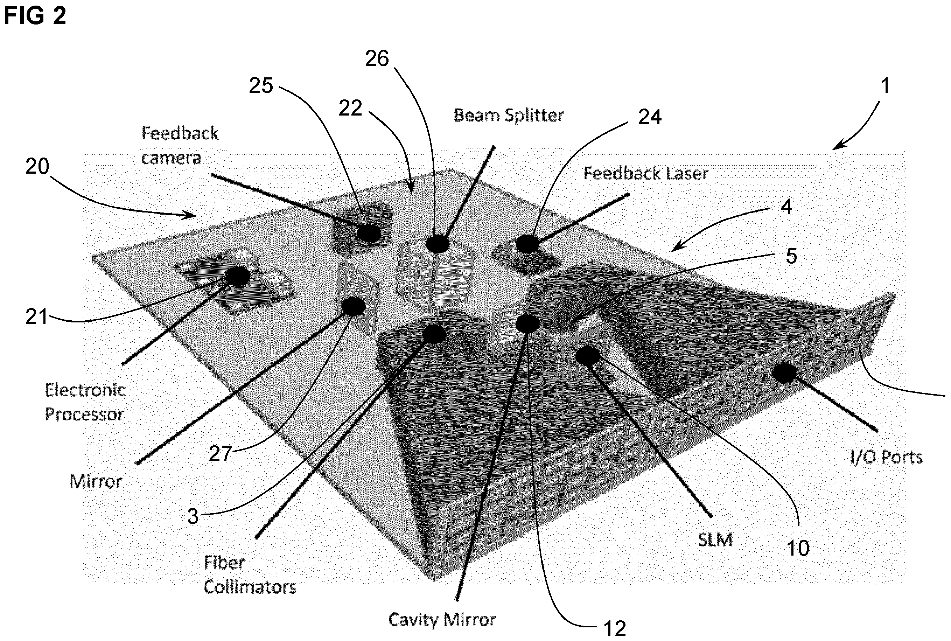

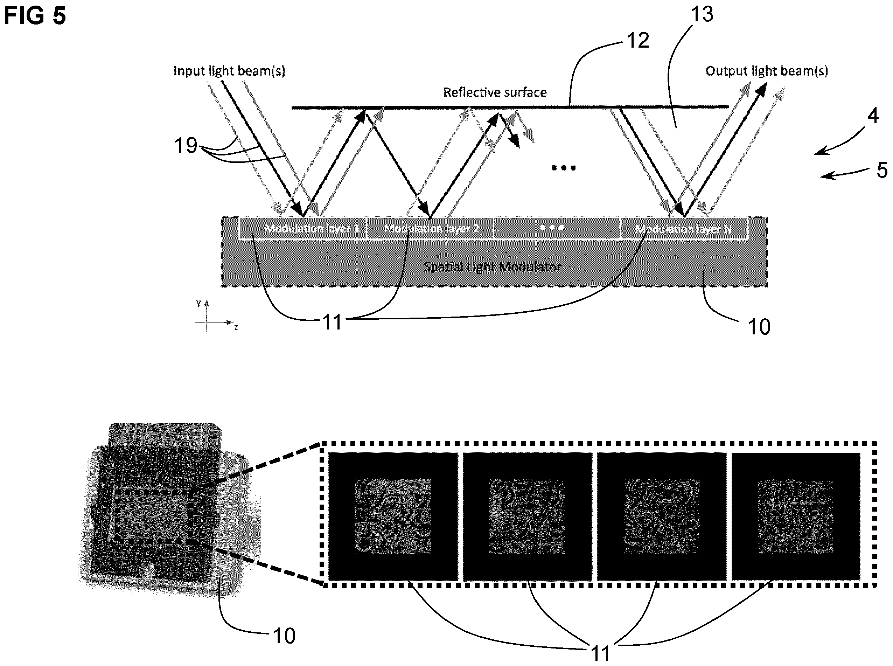

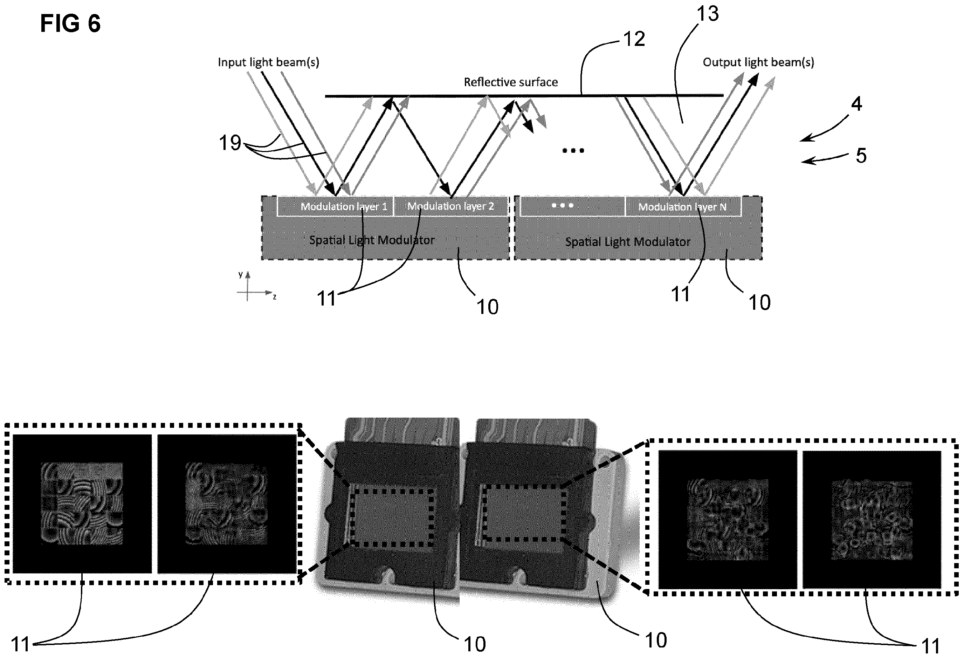

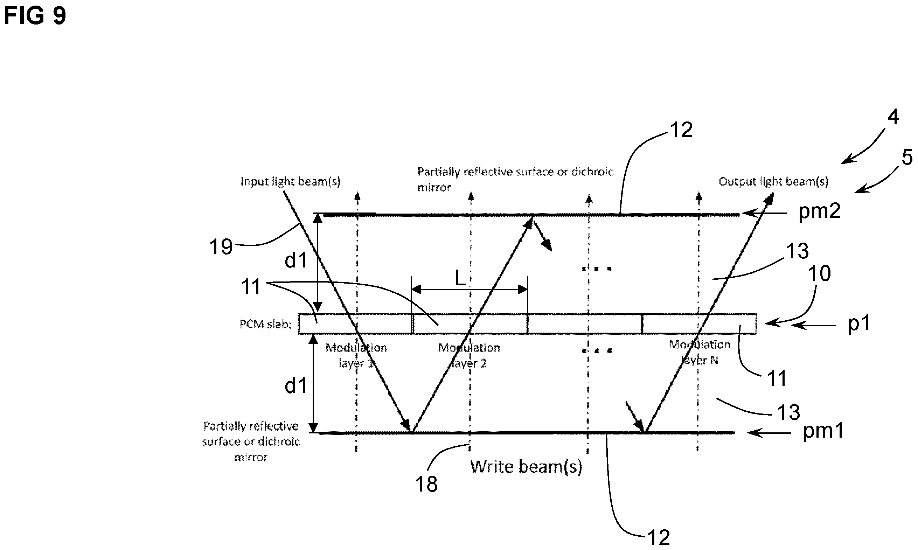

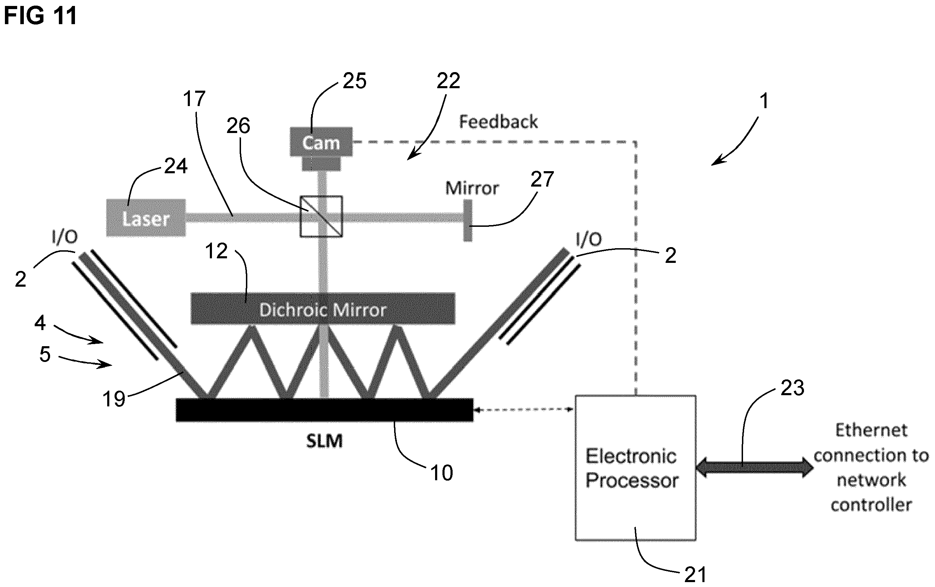

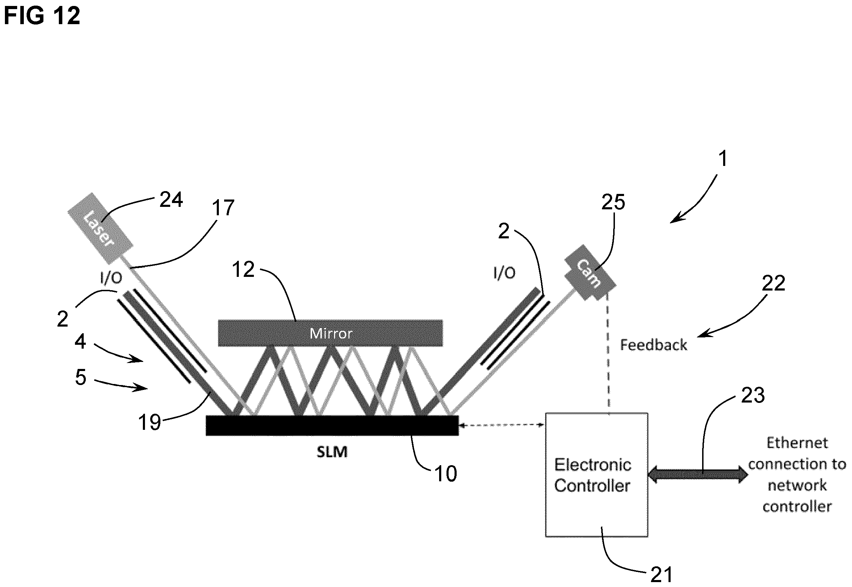

The embodiments comprising a multi-bounce cavity of figures 2-3, 5-12 have further the advantage that the optical interconnection device is more compact compared to the embodiment of figure 4.

The optical interconnection device further comprises a linear or nonlinear optical medium 13 or vacuum, and the light routing system 4 is configured to route light beams 19 from the receiving ports 2a to the transmitting ports 2b such that the light beams 19 propagate through the linear or nonlinear optical medium 13 or vacuum between sequential spatial modulations by the modulation patches 11. For example, after a light beam is split 19 by a spatial modulation into multiple light beams 19 propagating in different directions, these multiple light beams can be separated by the propagation in the medium 13 or by free space diffraction in vacuum such that the multiple light beams 19 are non-overlapping on one of the subsequent modulation patches 11. The medium is preferably a dielectric material, such as a glass, a crystal or a polymer and preferably has an absorption coefficient of less than 0.1 cm$^{-1}$ over the communication band.

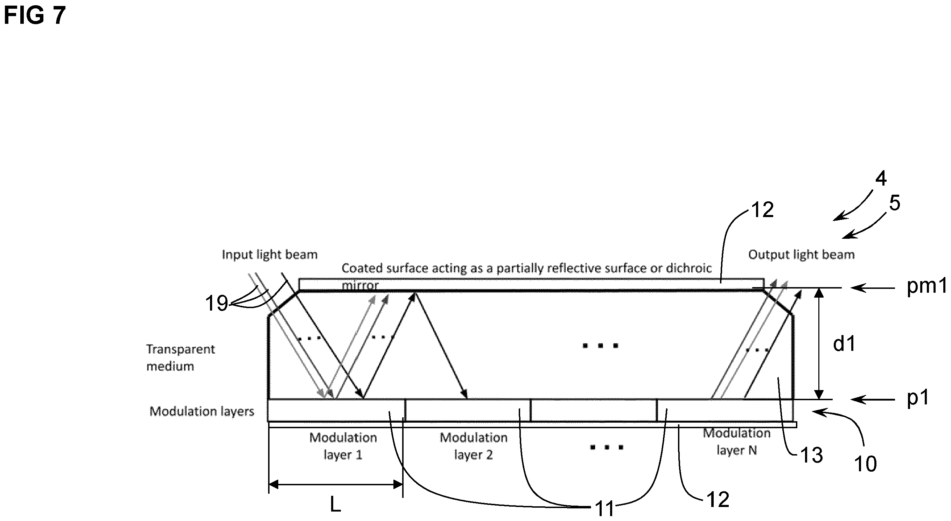

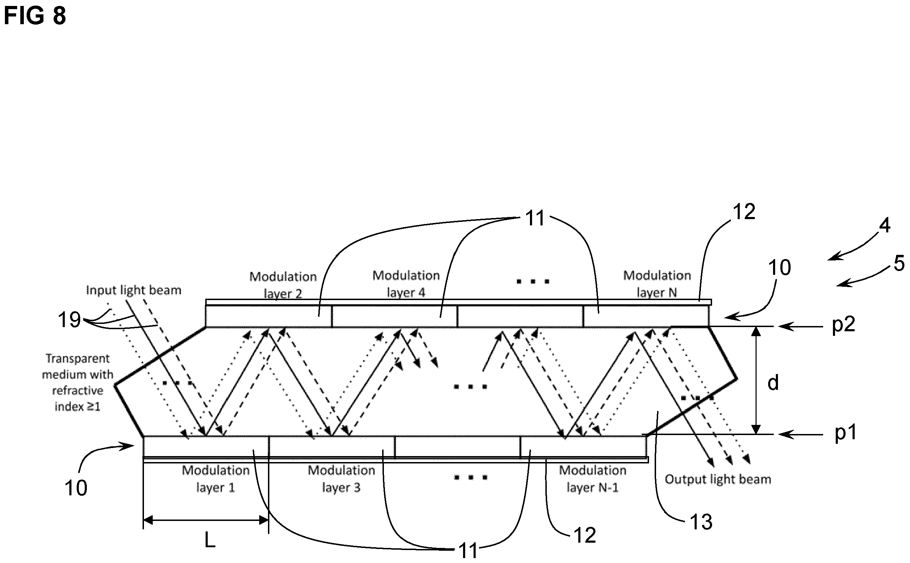

In advantageous embodiments, the optical interconnection device comprises a linear or nonlinear optical element 13 made of a linear or nonlinear optical medium 13 in contact with the at least one spatial light modulator 10 and, if applicable, the mirror(s) forming a multi-bounce cavity 5. Such a monolithic configuration is compact and avoids undesired light reflections at surfaces. Examples are shown in figures 7 and 8.

In preferred embodiments of an optical interconnection device with a collinear geometry in which each of the modulation patches 11 is located on a different parallel plane p1, p2, ... , the distance between the planes of the modulation patches d is larger than a length related to the modulation patches, e.g., the side length of a square modulation patch L or half a diameter of a modulation patch with an arbitrary shape. Steep deflection angles can be avoided with a sufficiently large distance between modulation patches d compared with the size of the modulation patches.

Likewise, in preferred embodiments of an optical interconnection device in which a multi-bounce cavity 5 is formed by a mirror and the modulation patches 11 arranged to extend on a single common plane p1, the distance d1 between the plane of the mirror pm1 or the mirrors pm1, pm2 is larger than a length related to the modulation patches, e.g., half the side length of a square modulation patch U2 or quarter a diameter of a modulation patch with an arbitrary shape.

Likewise, in preferred embodiments of an optical interconnection device in which all the modulation patches or layers 11 are arranged to extend on two common parallel planes p1, p2, the distance d between the two common parallel planes p1, p2 is larger than a length related to the modulation patches, e.g., the side length of a square modulation patch L or half a diameter of a modulation patch with an arbitrary shape.

In advantageous embodiments, the control system 20 further comprises an electronic processor 21 and a feedback system 22 comprising a light source 24 and a photodetector 25. The light source 24 is preferably a laser or a light-emitting diode (LED) and the photodetector 25 is preferably a camera. The light source 24 is configured to emit probe light 17. The feedback system 22 is configured to measure a feedback parameter related to the at least one spatial light modulator 10 based on probe light modulated by the at least one spatial light modulator 10 and detected with the photodetector 25. The control system 20 is configured to provide a feedback loop for adapting the modulation patches using the feedback parameter. The data in feedback loop is processed in the electronic processor 21. In particular, the feedback loop may optimize the interconnections between receiving and transmitting ports according to the target set of interconnections, e.g., by monitoring and correcting the displayed pattern on the spatial light modulator or by maximizing the power of the transmitted probe light and/or by minimizing cross-talk of probe light of dark channels.

In advantageous embodiments, the feedback system further comprises a beam splitter and a mirror to form an interferometer. The photodetector is a camera. A probe beam 17 emitted by the light source 24 is split by the beam splitter into a first beam, which is modulated by the at least one spatial light modulator 10 and a second beam, which is not modulated. The first and second beams are superposed and the superposition is measured with the camera. In this embodiment, the state of the at least one spatial light modulator 10 is acquired through holography, which is a measurement technique that obtains a complex light field of an object by the interference of two coherent beams. The obtained complex field is processed to assess the fidelity of the displayed SLM pattern with respect to the desired SLM pattern, yielding a feedback loop to correct any deviations occurring due to temperature change, drift in the alignment of different components in the system with respect to each other, etc. The SLM pattern comprises the modulation patches.

The probe beam 17 preferably illuminates the modulation layer(s) of the at least one spatial light modulator 10 at normal incidence or at an angle with a deviation of less than 10° from normal incidence, preferably less than 5° from normal incidence. In the embodiments in which the light routing system 4 comprises a mirror for forming a multi-bounce cavity 5, the mirror may be a partially reflecting mirror for reflecting light to be routed by the light routing system and also for transmitting probe light for this type of feedback system. Preferably, the mirror is a dichroic mirror for decoupling the probe beam and the data-carrying signal beams, i.e., the dichroic mirror is reflecting for the signal beams and transparent for the probe beam.

In other advantageous embodiments, the light source 24 of the feedback system 22 is coupled to a dark port or a dark channel to generate an inline probe beam 17, which is routed to the photodetector 25 by the spatial light modulator 10 to generate a feedback signal. The photodetector 25 can also be coupled to a dark port or dark channel of the input/output ports 2. In this way, the fidelity of the connectivity for one or more interconnections can be assessed directly. In the embodiments in which the light routing system 4 comprises a mirror for forming a multi-bounce cavity 5, the mirror is reflecting for both the signal beams as wells as the probe beam in this type of feedback system.

In preferred embodiments, the electronic processor 21 of the control system 20 is configured to determine a status of the optical interconnection device 1 based on the feedback parameter. The status is preferably binary with the possible values "operating" and "failing". In particular, the status may be determined by comparing the feedback parameter with a threshold or by comparing a fidelity parameter calculated from the feedback parameter with a threshold.

In some embodiments, the electronic processor 21 calculates a deviation of a measured SLM pattern from a desired SLM pattern and uses a norm of said deviation as a fidelity parameter to determine the status of the SLM. The status is "operating" if the norm of the deviation is below or equal to the threshold and "failing" if the norm of the deviation is above the threshold.

In other embodiments, the status is "operating" if the power of the transmitted probe beam is above or equal to the threshold and "failing" if the power of the transmitted probe beam is below the threshold.

In preferred embodiments, the control system 20 further comprises a control interface 23 configured to communicate with external devices. The control interface 23 is preferably an electronic communication interface. Alternatively, the control interface 23 is an optical communication interface. In particular, the optical interconnection device may communicate to a network controller 91 via the control interface 23. Moreover, two optical interconnection devices may communicate with each other via the control interface 23. Preferably, the control interface is 23 configured to receive commands from the network controller 91 to configure or reconfigure the interconnection or the plurality of interconnections of the target set of interconnections and the control system 20 is configured to generate a plurality of modulation patches 11 implementing said commands to configure or reconfigure the interconnection or the plurality of interconnections of the target set of interconnections. The optical interconnection device may further communicate a status of the optical interconnection device to the network controller 91 via the control interface 23.

It is important to note that the inventors have demonstrated nonlinear processing capabilities using a similar architecture (i.e., multiple wavefront modulation with a spatial light modulator) in a recent optical computing patent disclosure (optical data processing using structural nonlinearity, Application No. PCT/EP2023/066812) and optical computing publication (Mustafa Yildirim, Niyazi Ulas Dine, Ilker Oguz, Demetri Psaltis, and Christophe Moser. "Nonlinear Processing with Linear Optics." arXiv preprint arXiv:2307.08533 (2023)). In principle, this architecture used in the present invention can "decide" on switching operations, which is a nonlinear process by definition. Therefore, this architecture is able to switch the ports using a spatiotemporal signature that contains the destination address of the link where said spatiotemporal signature enables routing of the data during multiple wavefront shaping operations that synthesize the nonlinear switching decision. This procedure can bypass the need for a central network controller.

The successive wavefront shaping in multiple linear modulations by the displayed pattern on SLM combines with the diffraction of light to yield desired connectivity between input and output. We note that phase-conjugation or time reversal schemes are applicable for linear modulation and propagation of light. Therefore, bidirectional interconnection may be generated.

The control system 20 is configured to generate a plurality of modulation patches 11 by

- calculating the modulation patches 11 using the electronic processor 21 or
- retrieving pre-calculated modulation patches 11 from a memory.

The modulation patches can be calculated through various iterative optimization techniques, such as the adjoint method or gradient descent, which are well-documented in the literature. Figure 8 shows a flowchart of a preferred optimization algorithm according to an embodiment of the invention.

- In step 50, the target set of interconnections is defined, e.g., received through the control interface 23.
- In step 51, the modulation patches 11 are initialized, e.g., either randomly or uniformly.
- In step 52, the signal light field is propagated from given receiving ports 2a through the modulation patches 11 using a forward model and the resulting output field is recorded as a current estimate. A possible forward model for the system according to embodiments of the invention can routinely be developed using the angular spectrum method, which is a Fourier transform-based approach used to calculate the diffraction of light.
- In step 53, the current estimate is compared to the desired output using the following loss function. It is important to note that while we present this loss function as a fundamental concept, it can be extended to accommodate specific system design requirements.
- In step 54 (and iteratively through steps 52-54), one of the aforementioned optimization schemes is used to minimize the loss function, thereby identifying the optimum modulation layers.

$$\underset{modulation\ layers}{\operatorname{argmin}} \sum_{l=1}^{L} \left\| o_{target}^{l} - o_{estimate}^{l}(modulation\ layers) \right\|^{2}$$

L: Total number of input - output connectivity

$o_{target}^{l}$ : Target output field for a connection l

$o_{estimate}^{l}$ : Estimate output field based on modulation layers for a connection l

It is necessary that the total number of pixels of all modulation patches exceeds two times the product of the number of wavelength channels, the number of receiving ports, and the number of transmitting ports. Moreover, the number of modulation patches should be at least two. The number of wavelength channels is scalable relative to the number of pixels employed. In order to achieve comprehensive all-to-all connectivity within the system, it is essential that the entire system possesses an ample space-bandwidth product. This space-bandwidth product is contingent upon several factors, including the characteristics of the modulation layers (comprising the number of layers, number of pixels, and pixel pitch), the operational wavelength, and the distance between modulation layers. These parameters collectively determine the system's ability to establish the requisite connectivity and functionality. The examples given below consist of obtained connectivity responses and corresponding modulation layers, satisfying said hardware limitations.

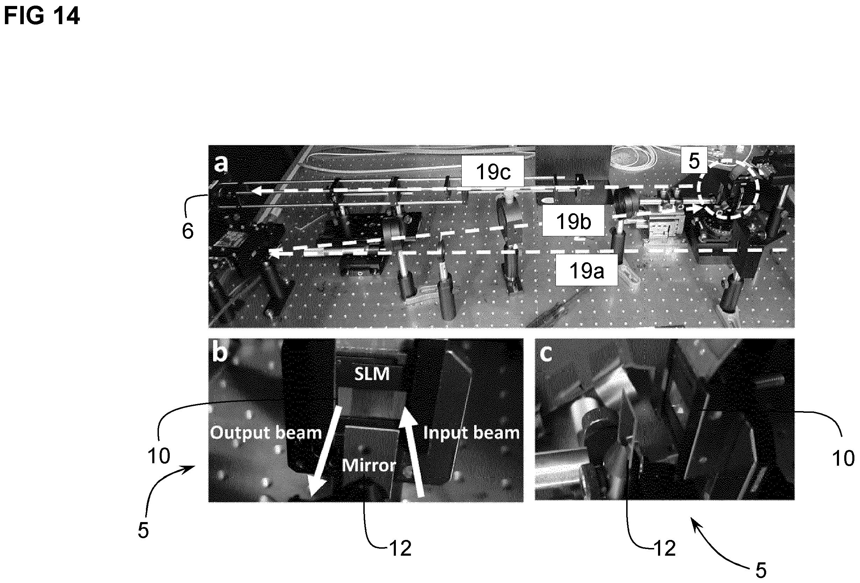

The photographs in figure 14 show the experimental setup used for the validation of the simulations. Figure 14a (top row) shows the entire optics of the experimental validation setup. The signal beam path 19 comprises three sections: The first section 19a is a collimated laser beam path; the second section 19b starts from a Digital Micromirror Device (DMD), which emulates an input fiber bundle and a 4F imaging system, which images the light from the DMD onto the multi-bounce cavity 5; and a third section 19c comprises another 4F imaging system, which images the output of the multi-bounce cavity 5 onto a camera 6, emulating the output fiber bundle. In figures 14b and c (bottom row), the front view of the multi-bounce cavity 5 and the side view of the multi-bounce cavity 5 in the setup are shown. The employed SLM 10 has a pixel pitch of 8 micrometers.

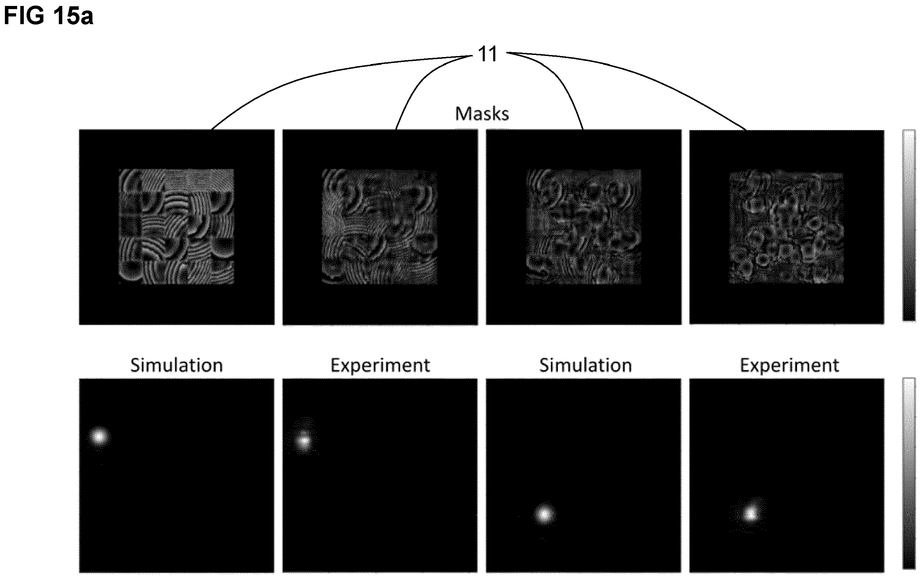

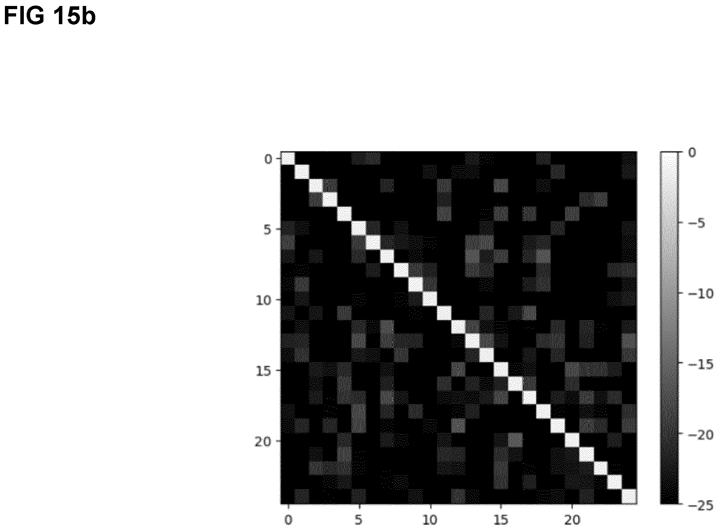

Figure 15a-b shows an example of masks and results of a device with four modulation patches that interconnect 25 input ports to 25 output ports that are positioned on 5 by 5 grids. The interconnections in this example consist of unicast interconnections. In the experiments, a single LC SLM is used with a mirror positioned across by approximately 15.2 mm to provide multiple bounces on the SLM display. As a light source, a continuous wave laser is employed with a wavelength of 850 nm. To emulate the input grid, a DMD is used. The output grid is recorded by a CMOS camera. The top row of figure 15a shows four modulation patches in the form of four phase masks obtained by the optimization method to provide the required target connectivity as described hereinabove. The greyscale bar shows the phase of the masks varying between 0 and $2\pi$. The inner squares where we observe the phase modulation are 2.4 mm by 2.4 mm. The bottom row of figure 15a shows two different examples of simulated outputs that correctly coincide with the target position and corresponding experimental results. The greyscale bar shows the normalized intensity for each recording and simulation with arbitrary units. Simulations show that for such a 25 by 25 unicast, broadband (meaning that spectral granularity is not utilized) device, we achieve 75% efficiency in connectivity (equivalent to -1.25 dB insertion loss) with a 5% standard deviation across different nodes for different connectivity maps with a mean cross-talk of -24 dB. In Figure 15b, we provide an example of a transmission matrix where rows represent the receiving ports and columns represent the transmitting ports (up to 25 for inputs and outputs in this example). The greyscale bar spans from 0 to -24 dB. The diagonal entries highlight optical power in correct mappings and off-diagonal entries indicate the cross-talk. Note that such a transmission matrix demonstration is well-known in the literature.

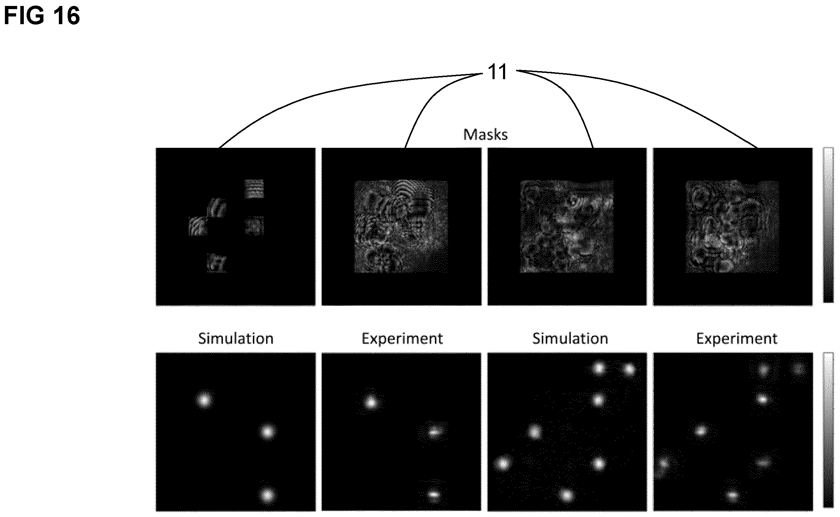

Figure 16 shows an example of masks and results of a device with four modulation patches that interconnect 25 input ports to 25 output ports that are positioned on 5 by 5 grids similar to example of figure 15a-b. This time, five input ports are multicasting their signal to three, four, five, six, and seven different output ports respectively, populating all the output ports. Again, spectral granularity is not utilized in this example. In the top row, we show four masks that are trained for such connectivity. The greyscale bar shows the phase of the masks varying between 0 and $2\pi$. On the bottom row, we show two examples, 1-to-3 and 1-to-7 multicasting respectively by providing simulated output planes that correctly coincide with the target position and corresponding experimental results. The greyscale bar shows the normalized intensity for each recording and simulation in arbitrary units. The experimental setup is the same as the above example. Note that, in this example, the positions of the input ports are also visible by checking the first modulation mask since there is a phase response only when there is input light on the modulation layer. With this multicast configuration, there is no significant change in connectivity efficiency and cross-talk, except that the power of the beam at the receiving port is divided between two or more transmitting ports. A graphical representation of a transmission matrix for multicasting is not straightforward because of the large number of possible combinations and is therefore not provided here.

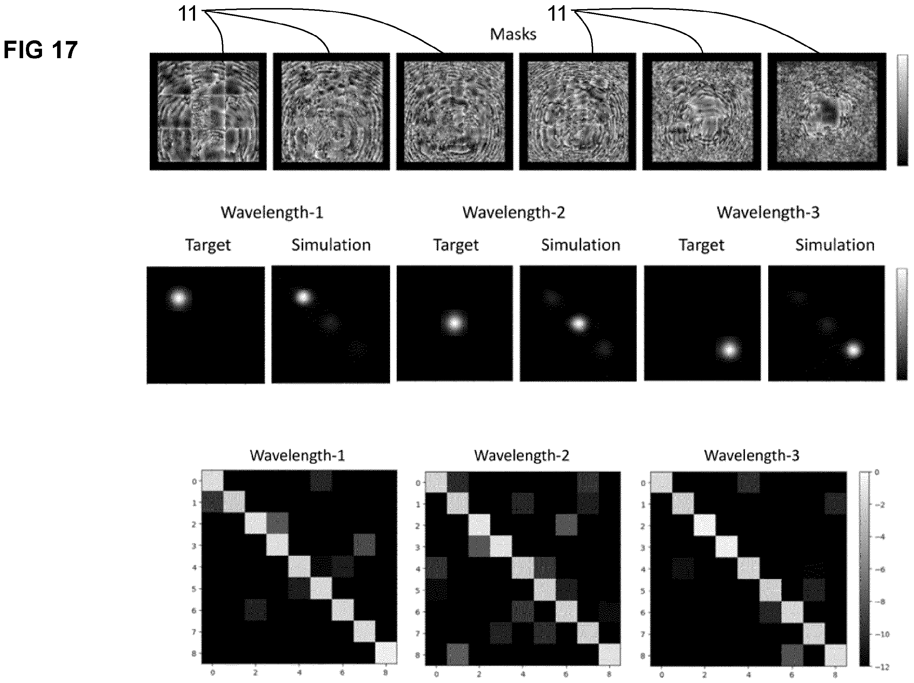

Figure 17 shows an example of masks and results of a device with six modulation patches that interconnect 9 spatial input ports to 9 spatial output ports that are positioned as a 3 by 3 grid where three different wavelengths are also incorporated in each channel (830 nm, 850 nm, and 870 nm respectively). In other words, this example demonstrates space-spectrum granularity by arbitrarily interconnecting 27 spatial-spectral receiving ports to 27 spatial-spectral transmitting ports. In the top row, we see six phase masks obtained by the optimization method to provide the required target connectivity as described hereinabove. The greyscale bar shows the phase of the masks varying between 0 and $2\pi$. The inner squares where we observe the phase modulation are 2.4 mm by 2.4 mm. In the row below, we see three different examples of target position and simulated outputs for three different wavelength inputs that share the same spatial input port (top-middle port in 3 by 3 arrangement). The greyscale bar shows the normalized intensity for each target and simulation with arbitrary units. Different wavelengths are routed to their assigned port by sequential wavefront shaping. Simulations show that for such a configuration, we achieve 65% efficiency in connectivity (equivalent to -1.9 dB insertion loss) with a 10% standard deviation across different nodes for different connectivity maps with a mean cross-talk of -14 dB.

In the last row of Fig. 10, we provide an example of transmission matrices for each wavelength where rows represent the receiving ports and columns represent the transmitting ports. The combination of three matrices naturally constitutes 27 spatial-spectral input/transmitting ports The greyscale bar spans from 0 to -12 dB.

It is important to note that the number of ports or nodes can be increased simply by engineering the SLM to mirror distance, employing more pixels of an SLM display, using modulators that have smaller pixel pitches yielding higher space-bandwidth-product, or employing multiple SLM displays.

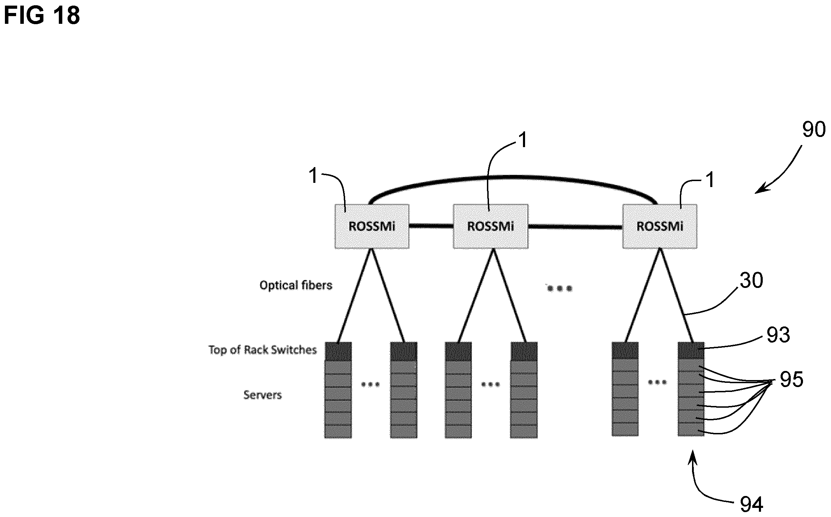

In the following, the embodiments of possible use cases for network architectures are explained. The first embodiment is a basic network architecture in which servers 95 are grouped in racks 94 and communicate with a Top of Rack (ToR) switch 93 through electrical cabling, i.e., the ToR switch 93 performs electrical-to-optical (EO) and optical-to-electrical (OE) conversions to enable data transmission between the servers 95 and the fiber optic cables 30 connected to the optical interconnection devices 1. The ToR switches 93 are connected to optical interconnection devices 1 with optical fibers 30 (see figure 18). The communication inquiries between servers 95 and/or racks 94 are managed by network controller software/hardware 91, which decides an interconnection topology. The network controller 91 communicates the topology to optical interconnection devices 1 via electrical cabling or optical fibers/waveguides or free space optical communication or any other suitable means. Since the topology information is typically small (low bandwidth), communication with electrical cables is feasible and clearly not costly. High-cost, high-bandwidth inter-server communication links between servers 95 that use optical fibers 30 are interconnected to their destinations via the optical interconnection devices 1 without any need for detection and optical-to-electrical conversion, unlike electronic interconnects. These connections between servers 95 are achieved by spatially modulating the light in the optical interconnection devices 1 through the displayed modulation layers on the SLMs, which are implemented using the topology obtained from the network controller.

Hence, from a sender ToR switch to a receiver ToR switch, the optical information is sent without any optical-to-electrical-to-optical (OEO) conversion and with minimal latency. Having bypassed the need for detection, the optical interconnection devices 1 remove the need for detectors, transceivers, and electronic memory that are required in electronic interconnects.

The number of input/output ports 2 of optical interconnection devices 1 can be easily scaled as it only depends on the pixel number of employed SLM(s), which is a mature scalable technology. In contrast to similar optical solutions with mentioned advantages in the prior art, optical interconnection devices 1 of the invention are capable of connecting any group of receiving ports to any group of transmitting ports selectively, which is termed as "multicast" by network experts. This selective multicasting was only possible with electronic switches until now. The ability to multicast is due to the fundamental multi-connection nature of diffraction that optical interconnection devices 1 of the invention use to provide a desired interconnection topology. Hence, if a server 95 needs to multicast a specific portion of information, this task is seamlessly performed in a data center comprising an optical interconnection device 1 of the invention. This is because the sender server does not need to use multiple channels beforehand, as an optical interconnection device 1 of the invention can provide the capability of multicasting without the need of an electronic switch.

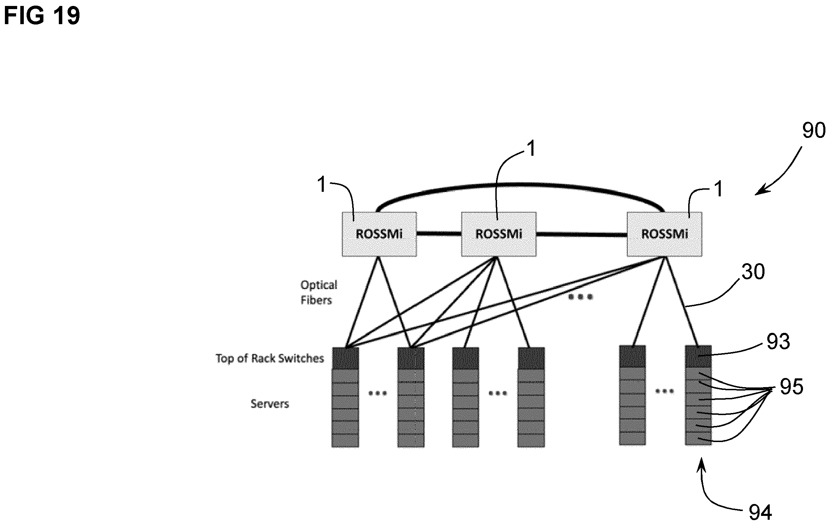

Unlike the Clos architecture, each of the top-of-rack switches does not require multiple optical interconnection devices 1 to be connected to it. Instead, the multicastable optical interconnection device 1 can be linked to each other (see figures 18 and 19). Moreover, an electronic switch may become "blocking" for the time of performing a multicast operation as it needs to use separately its electro-optic modulators for each channel and effectively utilize and write/read from its memory. In contrast to electronic switches, the optical interconnection device 1 of the invention is "non-blocking" by its nature when there is no reconfiguration of network topology. An optical interconnection device 1 of the invention is non-responsive only when the displayed pattern is reconfigured. This is, on a very fundamental level, due to the refresh rate of the employed SLM technology, which can vary depending on the used technology. A trade-off of the capability of multicasting manifests itself here since a single pixel on the SLM device may contribute to a plurality of connections. Hence, it is typically not possible to have the fixed connections undisturbed when reconfiguring some other connections, which prevents a single optical interconnection device 1 of the invention from being "hitless" if a ToR switch is connected to a single optical interconnection device 1. However, each SLM technology has a reconfiguration/refresh time, which the network controller 91 can take into account. That enables the building of an architecture of many optical interconnection devices 1 that collectively act as a hitless and non-blocking interconnect fabric. In the embodiment illustrated in figure 19, one ToR switch 93 is connected to multiple optical interconnection devices 1 (see Figure 19) so that the network controller 91 can direct the outgoing signals from a ToR switch 93 to already established optical interconnection devices 1 while the others are reconfiguring. Therefore, the interconnect fabric as a whole becomes hitless. In summary, figure 19 shows a hitless networking architecture built using optical interconnection devices 1 of the invention.

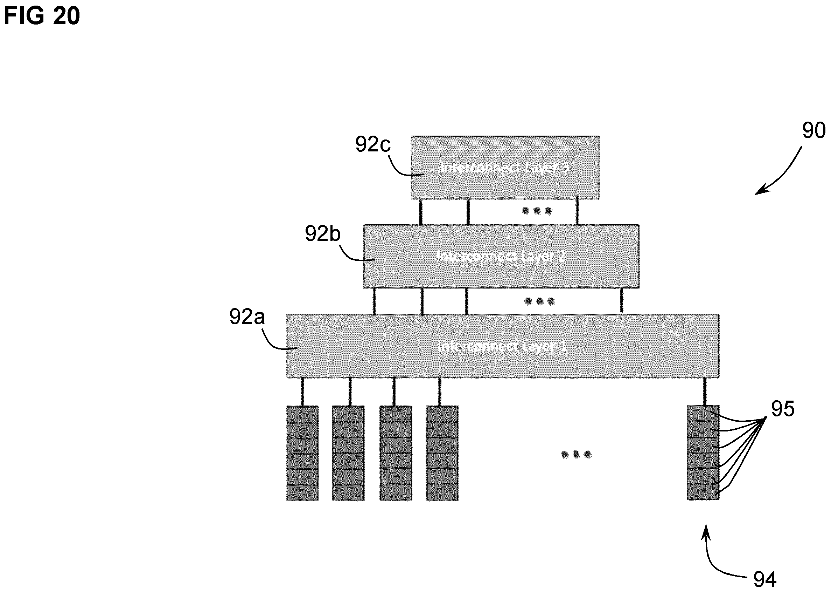

Another advantage of optical interconnection devices 1 of the invention is being agnostic to data rates, consequently making them interoperable with different generations of transceiver technology. Hence data center/network operators can adopt a partial approach where interconnect fabrics are hybrid in the sense that they employ both conventional electronic switches and optical interconnection devices 1 of the invention. These hybrid layers can be arranged in a hierarchical architecture (see figure 20). In this hybrid approach, bandwidth-intensive multicast favoring connection tasks can be performed by optical interconnection devices 1 of the invention, while other tasks, including taking care of optical interconnection device reconfiguration time architecturally to have a hitless and non-blocking overall fabric can be performed by electronic switches.

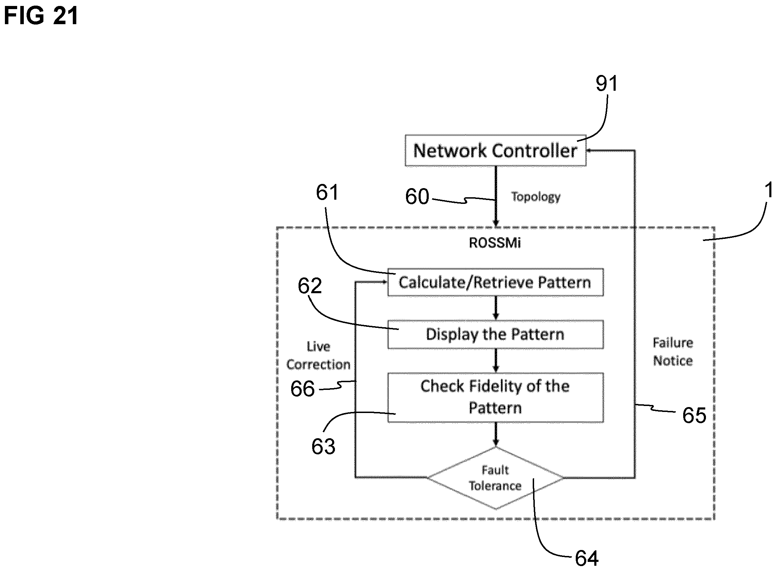

Figure 21 depicts the operational workflow of an optical interconnection device 1 of the invention in a network infrastructure, including internet networks, local and wide area networks, data centers, and computer clusters. The communication paths within these networks are managed by a network controller 91, who determine the optimal topology based on the requested job. The optical interconnection device 1 receives topology requests from the network controller 91 (step 60) and generates patterns for SLMs accordingly (steps 61 and 62). These patterns may be calculated by optical interconnection device 1 or retrieved from memory, which can be stored either in the optical interconnection device 1 itself or in memory blocks located within the network (step 61). The patterns are then fetched and displayed on the SLMs (step 62). The status of the SLMs and the resulting interconnections are verified using the aforementioned digital holographic feedback (steps 63). If the fidelity of the connections is not satisfactory (step 64), the operations are repeated to generate better patterns (step 66) or the network controller is alerted (step 65).

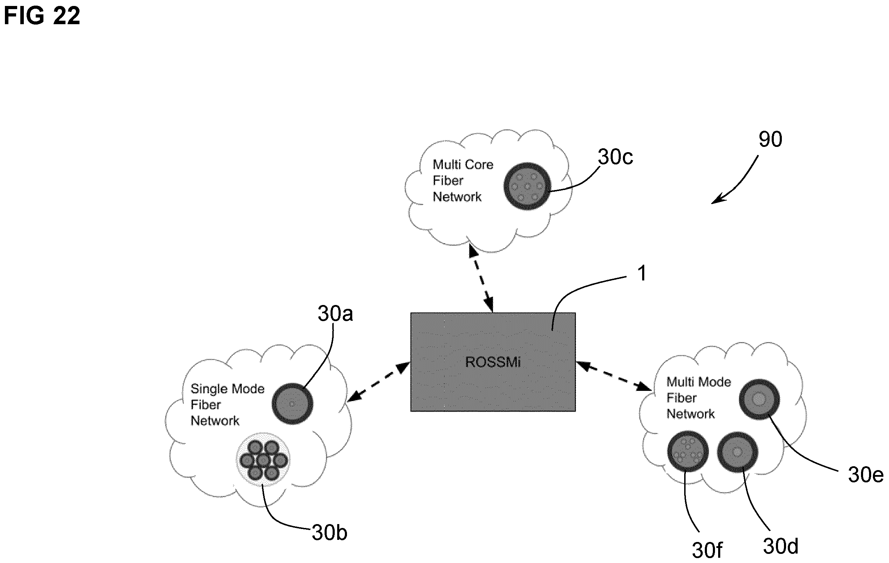

It is crucial to note that using repetitive wavefront shaping provides the flexibility to switch the grid geometry and domains of the input/output signals. For instance, receiving ports 2a of the optical interconnection device 1 may correspond to single-mode fiber bundles while the transmitting ports 2b correspond to a multi-mode fiber where each single-mode fiber can be mapped to a specific mode of the multi-mode fiber. Similar connections may be established for other types of fiber such as multi-core fibers, coupled-core fibers, few-mode fibers, and ring-core multi-mode fibers. The optical interconnection device 1 of the invention can seamlessly interface between different telecom fiber technologies, which yields great flexibility for network design and partial upgrades during operation of the telecom networks that need to employ different generations of technologies. This concept is illustrated in Figure 22. In Figure 22, a single-mode fiber network is depicted by a representation of a single-mode fiber 30a and single-mode fiber bundle 30b; a multi-core fiber network is depicted by a representation of a multi-core fiber 30c; and a multi-mode fiber network is depicted by a representation of a few-mode fiber 30d, a multi-mode fiber 30e and a coupled-core fiber 30f.

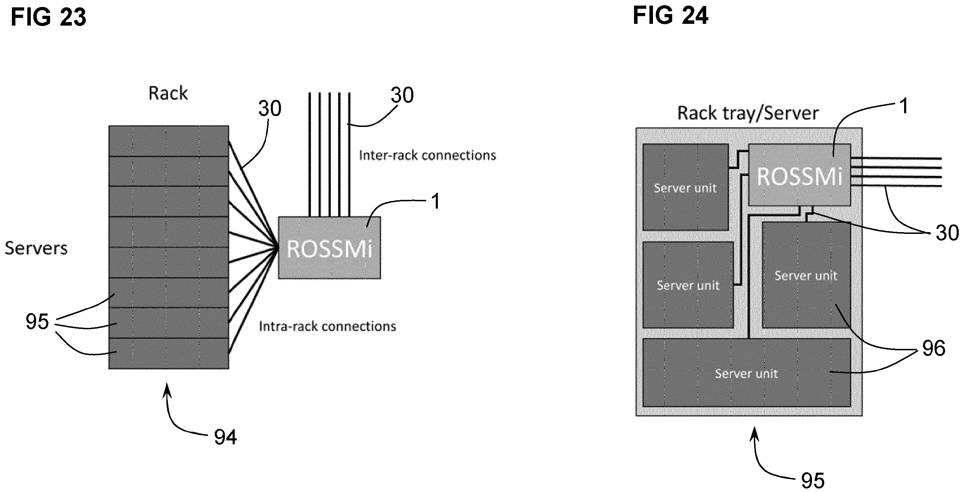

According to the illustrative embodiment shown in figure 23, an optical interconnection device 1 of the invention is used for intra- and inter-rack server communication within a data center environment. In this embodiment, each server 95 is connected to the optical interconnection device 1 via fiber optic cables 30, which enables high-speed communication between the servers 95. This embodiment of a use of an optical interconnection device 1 of the invention offers several advantages over traditional networking approaches. Using an optical interconnection device 1 of the invention to establish connections between servers reduces the need for optoelectronic conversions, resulting in a higher energy efficiency. Furthermore, the dynamic reconfiguration of connections enabled by the optical interconnection device 1 of the invention allows for greater scalability and adaptability in response to advancing network technologies.

According to the illustrative embodiment shown in figure 24, an optical interconnection device 1 of the invention is used for intra- and inter-server communication within a data center environment. In this embodiment, each server unit 96, e.g., processors, memory etc. with a suitable optical input/output port is connected to the optical interconnection device 1 via fiber optic cables or waveguides 30, which enables high-speed communication between the server units 96. There is more and more research and products in the market on server units with optical input/output ports, which makes the optical interconnection device 1 of the invention a suitable device for all interconnection levels.

In advantageous embodiments, the optical interconnection device 1 of the invention is designed to fit in a rack 94.

**Prior Art: Fixed optical mode multiplexers**

- Dine, N. U., Lim, J., Kakkava, E., Moser, C., & Psaltis, D. (2020). Computer generated optical volume elements by additive manufacturing. Nanophotonics, 9(13), 4173-4181.
- Porte, X., Dine, N. U., Moughames, J., Panusa, G., Juliano, C., Kadic, M., Moser, C., Brunner, D., & Psaltis, D. (2021). Direct (3+ 1) D laser writing of graded-index optical elements. Optica, 8(10), 1281-1287.
- Mounaix, M., Fontaine, N.K., Neilson, D.T. et al. Time reversed optical waves by arbitrary vector spatiotemporal field generation. Nat Commun 11, 5813 (2020). https://doi.org/10.1038/s41467-020-19601-3

**Reconfigurable interconnections in the Born regime:**

- Lee, H., Gu, X. G., & Psaltis, D. (1989). Volume holographic interconnections with maximal capacity and minimal cross talk. Journal of applied physics, 65(6), 2191-2194.

**Other solutions with fixed interconnects:**

- Mengu, D., Zhao, Y., Tabassum, A., Jarrahi, M., & Ozcan, A. (2022). Diffractive interconnects: all-optical permutation operation using diffractive networks. Nanophotonics.

**Other solutions with fixed optical mode multiplexers:**

- Labroille, G., Denolle, B., Jian, P., Genevaux, P., Treps, N., & Morizur, J. F. (2014). Efficient and mode selective spatial mode multiplexer based on multi-plane light conversion. Optics express, 22(13), 15599-15607.
- Jacuard, C., Desbiolles, P., & Nolle, B. (2020). U.S. Patent Application No. 16/959,078.

**Other solutions using dynamic spatial light modulators:**

- Fontaine, N. K., Ryf, R., Chen, H., Neilson, D. T., Kim, K., & Carpenter, J. (2019). Laguerre-Gaussian mode sorter. Nature communications, 10(1), 1865.
- Frisken, S. J. (2017). U.S. Patent No. 9,654,848. Washington, DC: U.S. Patent and Trademark Office.
- William H. Culver, Donald Cronin Schmadel, Jr. Optical Switch. United States. US 6,430,328 B1. Publication date: 2002-08-06, expiration date: 2020-10-13.

**Other solutions with reconfigurable optical point-to-point routers:**

- Urata, R., Liu, H., Yasumura, K., Mao, E., Berger, J., Zhou, X., ... & Vahdat, A. (2022). Mission Apollo: Landing optical circuit switching at datacenter scale. arXiv preprint arXiv:2208.10041.
- Vahdat, A., Zhao, X., Germano, P., Koley, B., & Liu, H. (2015). U.S. Patent No. 9,184,845. Washington, DC: U.S. Patent and Trademark Office.

**Other solutions with fixed optical broadcast units:**

- Xia, Y., Ng, T. E., & Sun, X. S. (2015, April). Blast: Accelerating high-performance data analytics applications by optical multicast. In 2015 IEEE Conference on Computer Communications (INFOCOM) (pp. 1930-1938). IEEE.
- Das, S., Rahbar, A., Wu, X. C., Wang, Z., Wang, W., Chen, A., & Ng, T. E. (2022). Shufflecast: An optical, data-rate agnostic and low-power multicast architecture for next-generation compute clusters. IEEE/ACM Transactions on Networking.
- Samadi, P., Gupta, V., Xu, J., Wang, H., Zussman, G., & Bergman, K. (2015). Optical multicast system for data center networks. Optics express, 23(17), 22162-22180.

*List of references*

optical interconnection device 1

input/output ports 2

receiving ports 2a
transmitting ports 2b

collimators 3

light routing system 4

multi-bounce cavity 5

spatial light modulator (LC or PCM based) 10
modulation layers or patches 11
mirror 12
medium 13

planes of input/output ports pio1, pio2
plane(s) of the modulation patches p1, p2
plane(s) of the mirror(s) pm1, pm2
length of the modulation patches L
distance between planes of modulation layers d
distance between plane of modulation layers and mirror(s) d1
*probe beams 17*
*write beams 18*
*signal beams 19, 19a, 19b, 19c*

control system 20

electronic processor 21
feedback system 22

light source 24
photodetector 25
beam splitter 26
mirror 27

control interface 23

communication network 90

network controller 91
interconnect layer 92a, 92b, 92c
optical interconnection device 1
information processing systems

top of rack switches 93
rack 94
servers 95
server units 96

optical fibers 30

**Claims**

1. An optical interconnection device (1) comprising:

   - a plurality of input/output ports (2) comprising a plurality of receiving ports (2a) and a plurality of transmitting ports (2b),
   - a light routing system (4) comprising at least one spatial light modulator (10) and
   - a control system (20),

   wherein the optical interconnection device (1) is configurable to receive optical signals from the plurality of receiving ports (2a) and transmit said optical signals to the plurality of transmitting ports (2b) according to a target set of interconnections, wherein the control system (20) is configured to generate a plurality of modulation patches (11) on the at least one spatial light modulator (10), wherein the plurality of modulation patches (11) are configured to impose spatial modulations on light beams (19) received by the receiving ports for routing said light beams (19) from the receiving ports (2a) to the transmitting ports (2b), thereby creating an interconnection or a plurality of interconnections from at least one of the receiving ports (2a) to at least one of the transmitting ports (2b) according to the target set of interconnections.

2. The optical interconnection device (1) according to the claim 1, wherein the target set of interconnections comprises at least one interconnection selected from

  - a unicast interconnection routing optical signals of any wavelength channel from any single receiving port (2a) to any single transmitting port (2b), and/or
  - a multicast interconnection routing optical signals of any wavelength channel from any single receiving port (2a) to any plurality of transmitting ports (2b).

3. The optical interconnection device (1) according to any preceding claim, wherein the spatial modulations include phase modulations, amplitude modulations and/or polarization modulations.

4. The optical interconnection device (1) according to any preceding claim, wherein the at least one spatial light modulator (10) is at least one liquid crystal spatial light modulator or at least one phase-change material-based spatial light modulator.

5. The optical interconnection device (1) according to any preceding claim, wherein the optical interconnection device is connectable to optical fibers (30) and configurable to transfer optical signals between the connected optical fibers (30) through the input/output ports (2) according to the target set of interconnections.

6. The optical interconnection device (1) according to any preceding claim, wherein the plurality of input/output ports (2) are spatially distributed in at least one two-dimensional pattern.

7. The optical interconnection device (1) according to the directly preceding claim, wherein the input/output ports (2) are spatially non-overlapping or formed by orthogonal spatial mode profiles.

8. The optical interconnection device (1) according to any preceding claim, further comprising a linear or nonlinear optical medium (13) or vacuum, and wherein the light routing system (4) is configured to route light beams (19) from the receiving ports (2a) to the transmitting ports (2b) such that the light beams (19) propagate through the linear or nonlinear optical medium (13) or vacuum between spatial modulations by the modulation patches (11).

9. The optical interconnection device (1) according to any preceding claim, wherein the light routing system (4) comprises a multi-bounce cavity (5) formed

  - by two mirrors (12), wherein the plurality of modulation patches (11) are arranged to extend in a single common plane (p1) between the two mirrors and configured to operate in transmission;
  - by a single mirror (12) and the plurality of modulation patches (11) arranged to extend in a single common plane (p1) facing the mirror (12) and configured to operate in reflection; or
  - the plurality of modulation patches (11) arranged to extend in two common parallel planes (p1, p2) and configured to operate in reflection.

10. The optical interconnection device (1) according to the directly preceding claim, wherein the multi-bounce cavity (5) is configured to bounce the light beams propagating from the receiving ports (2a) to the transmitting ports (2b) between

  - the two mirrors (12);
  - the single mirror (12) and the plurality of modulation patches (11) arranged to extend in a single common plane (p1); or
  - the plurality of modulation patches (11) arranged to extend in two common parallel planes (p1, p2), respectively.

11. The optical interconnection device (1) according to any preceding claim, wherein at least one interconnection is a bidirectional interconnection for bidirectionally transferring optical signals between two input/output ports (2) using light beams routed by spatial modulations imposed by the plurality of modulation patches (11) on the light beams.

12. The optical interconnection device (1) according to any preceding claim, wherein the control system (20) further comprises a feedback system (22) comprising a light source (24) and a photodetector (25), wherein the light source (24) is configured to emit probe light (17) and wherein the feedback system (22) is configured to measure a feedback parameter related to the at least one spatial light modulator (10) based on probe light modulated by the at least one spatial light modulator (10) and detected with the photodetector (25), wherein the control system (20) is configured to provide a feedback loop for adapting the modulation patches (11) using the feedback parameter.

13. The optical interconnection device (1) according to any preceding claim, wherein the control system (20) comprises a control interface (23) configured to receive commands from a network controller (91) to configure or reconfigure the interconnection or the plurality of interconnections of the target set of interconnections, and wherein the control system (20) is configured to generate a plurality of modulation patches (11) implementing said commands to configure or reconfigure the interconnection or the plurality of interconnections of the target set of interconnections.

14. The optical interconnection device (1) according to the directly preceding claim, wherein the control system (20) is configured to determine a status of the optical interconnection device (1) based on the feedback parameter and send said status to the network controller (91) via the control interface (23).

15. Method of setting a topology of a communication network (90) comprising:

   - providing an optical interconnection device (1) according to any of the two directly preceding claims,
   - connecting said optical interconnection device (1) to a plurality of information processing systems (93, 94, 95, 96) such as electrical interconnects, optical interconnects, computers, and/or servers via optical fibers,
   - connecting said optical interconnection device (1) to a network controller (91) via the control interface (23),
   - receiving via the control interface (23) commands from the network controller (91) to configure or reconfigure the interconnection or the plurality of interconnections of the target set of interconnections, and
   - generating by the control system (20) a plurality of modulation patches (11) implementing said commands to configure or reconfigure the interconnection or the plurality of interconnections of the target set of interconnections.

**FIG 1**

EP 4 554 118 A1

## FIG 2

**FIG 2** diagram labels:
- Feedback camera — 25
- 26
- 22
- Beam Splitter — 24
- Feedback Laser
- 20
- 4
- 5
- 21
- Electronic Processor
- Mirror
- 27
- 3
- Fiber Collimators
- Cavity Mirror
- 12
- SLM
- 10
- I/O Ports
- 1

EP 4 554 118 A1

**FIG 3**

Spatial Interconnect with Multicast

Multicast with Space-Spectral granularity

Cavity Mirror

Spatial Light Modulator

Output

Unicast input

Multicast input

Multicast input - λ₁

Unicast input - λ₂

**FIG 4**

Light beam routing by succesive wavefront shaping

EP 4 554 118 A1

**FIG 5**

EP 4 554 118 A1

**FIG 6**

EP 4 554 118 A1

**FIG 7**

Input light beam

19

Coated surface acting as a partially reflective surface or dichroic mirror

Transparent medium

Modulation layers

Modulation layer 1

Modulation layer 2

· · ·

Modulation layer N

L

11

12

13

10

4

5

12

Output light beam

pm1

d1

p1

EP 4 554 118 A1

**FIG 8**

**FIG 9**

Input light beam(s)

Partially reflective surface or dichroic mirror

Output light beam(s)

pm2

19

d1

11

L

13

10

PCM slab:

p1

Modulation layer 1

Modulation layer 2

Modulation layer N

11

d1

13

Partially reflective surface or dichroic mirror

Write beam(s)

pm1

18

12

4

5

EP 4 554 118 A1

**FIG 10**

# FIG 11

**FIG 12**

EP 4 554 118 A1

**FIG 13**

Target Connectivity — 50

↓

Initialize Modulation Layers — 51

↓

Forward Model — 52

↓

Calculate the loss — 53

↓

Optimize Modulation Layers — 54

**FIG 14**

EP 4 554 118 A1

FIG 15a

FIG 15b

FIG 16

FIG 17

EP 4 554 118 A1

**FIG 18**

EP 4 554 118 A1

**FIG 19**

FIG 20

**FIG 21**

FIG 22

**FIG 23**

Rack

30

30

Inter-rack connections

1

ROSSMi

Servers

95

Intra-rack connections

94

**FIG 24**

Rack tray/Server

1

Server unit

ROSSMi

30

Server unit

Server unit

96

Server unit

95

EP 4 554 118 A1

Europäisches
Patentamt

European
Patent Office

Office européen
des brevets

## EUROPEAN SEARCH REPORT

Application Number

**EP 23 20 8401**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/315507 A1 (COLLINGS NEIL [GB] ET AL) 2 November 2017 (2017-11-02) * paragraphs [0054], [0019], [0049], [0012], [0014]; figures 1a,7 * | 1-7, 11-15 | INV. H04B10/80 H04Q11/00 |
| X | US 2011/280573 A1 (COLLINGS NEIL [GB] ET AL) 17 November 2011 (2011-11-17) * paragraphs [0019], [0020], [0042]; claims 4,5; figure 3 * | 1,4,5, 8-10 | |
| X | US 8 089 683 B2 (HOLMES MELANIE [GB]; SWAN THOMAS & CO LTD [GB]) 3 January 2012 (2012-01-03) * column 15, line 36 – line 57; claims 1,6; figures 1,2,3 * | 1-5, 8-10,13, 15 | |
| A | ROBERTSON BRIAN ET AL: "Reduction of crosstalk in a colourless multicasting LCOS-based wavelength selective switch by the application of wavefront encoding", NEXT-GENERATION OPTICAL COMMUNICATION: COMPONENTS, SUB-SYSTEMS, AND SYSTEMS, SPIE, 1000 20TH ST. BELLINGHAM WA 98225-6705 USA, vol. 8284, no. 1, 21 January 2012 (2012-01-21), pages 1-8, XP060000990, DOI: 10.1117/12.907281 [retrieved on 2012-01-24] * the whole document * | 1-15 | TECHNICAL FIELDS SEARCHED (IPC) H04B H04Q |

The present search report has been drawn up for all claims

| Place of search | Date of completion of the search | Examiner |
|---|---|---|
| Munich | 22 April 2024 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 554 118 A1

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| US 2017315507 | A1 | 02-11-2017 | CN | 103403593 A | 20-11-2013 |
| | | | EP | 2676159 A2 | 25-12-2013 |
| | | | JP | 6253989 B2 | 27-12-2017 |
| | | | JP | 2014511500 A | 15-05-2014 |
| | | | KR | 20140021568 A | 20-02-2014 |
| | | | US | 2015286187 A1 | 08-10-2015 |
| | | | US | 2017315507 A1 | 02-11-2017 |
| | | | WO | 2012110811 A2 | 23-08-2012 |
| US 2011280573 | A1 | 17-11-2011 | BR | PI0921668 A2 | 26-06-2018 |
| | | | CN | 102282508 A | 14-12-2011 |
| | | | EP | 2364460 A1 | 14-09-2011 |
| | | | JP | 2012508908 A | 12-04-2012 |
| | | | KR | 20110097777 A | 31-08-2011 |
| | | | US | 2011280573 A1 | 17-11-2011 |
| | | | WO | 2010055351 A1 | 20-05-2010 |
| US 8089683 | B2 | 03-01-2012 | AU | 2002321598 A1 | 18-03-2003 |
| | | | EP | 1466218 A2 | 13-10-2004 |
| | | | EP | 2508951 A1 | 10-10-2012 |
| | | | US | 2005018259 A1 | 27-01-2005 |
| | | | US | 2007035803 A1 | 15-02-2007 |
| | | | US | 2007268537 A1 | 22-11-2007 |
| | | | US | 2008145053 A1 | 19-06-2008 |
| | | | US | 2010209109 A1 | 19-08-2010 |
| | | | US | 2013070320 A1 | 21-03-2013 |
| | | | US | 2015177685 A1 | 25-06-2015 |
| | | | US | 2017102603 A1 | 13-04-2017 |
| | | | US | 2019219889 A1 | 18-07-2019 |
| | | | US | 2019243211 A1 | 08-08-2019 |
| | | | WO | 03021341 A2 | 13-03-2003 |

EPO FORM P0459

For more details about this annex : see Official Journal of the European Patent Office, No. 12/82

# EP 4 554 118 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2023066812 W
- US 95907820 A, Jacuard, C., Desbiolles, P., & Nolle, B.
- US 9654848 B, Frisken, S. J.
- US 6430328 B1, William H. Culver, Donald Cronin Schmadel, Jr.
- US 9184845 B, Vahdat, A., Zhao, X., Germano, P., Koley, B., & Liu, H.

### Non-patent literature cited in the description

- **MUSTAFA YILDIRIM** ; **NIYAZI ULAS DINE** ; **ILKER OGUZ** ; **DEMETRI PSALTIS** ; **CHRISTOPHE MOSER**. Nonlinear Processing with Linear Optics. *arXiv preprint arXiv:2307.08533*, 2023
- **DINE, N. U.** ; **LIM, J.** ; **KAKKAVA, E.** ; **MOSER, C.** ; **PSALTIS, D.** Computer generated optical volume elements by additive manufacturing. *Nanophotonics*, 2020, vol. 9 (13), 4173-4181
- **PORTE, X.** ; **DINE, N. U.** ; **MOUGHAMES, J.** ; **PANUSA, G.** ; **JULIANO, C.** ; **KADIC, M.** ; **MOSER, C.** ; **BRUNNER, D.** ; **PSALTIS, D.** Direct (3+ 1) D laser writing of graded-index optical elements. *Optica*, 2021, vol. 8 (10), 1281-1287
- **MOUNAIX, M.** ; **FONTAINE, N.K.** ; **NEILSON, D.T. et al.** Time reversed optical waves by arbitrary vector spatiotemporal field generation. *Nat Commun*, 2020, vol. 11, 5813, https://doi.org/10.1038/s41467-020-19601-3
- **LEE, H.** ; **GU, X. G.** ; **PSALTIS, D.** Volume holographic interconnections with maximal capacity and minimal cross talk.. *Journal of applied physics*, 1989, vol. 65 (6), 2191-2194
- **MENGU, D.** ; **ZHAO, Y.** ; **TABASSUM, A.** ; **JARRAHI, M.** ; **OZCAN, A.** Diffractive interconnects: all-optical permutation operation using diffractive networks. *Nanophotonics*, 2022
- **LABROILLE, G.** ; **DENOLLE, B.** ; **JIAN, P.** ; **GENEVAUX, P.** ; **TREPS, N.** ; **MORIZUR, J. F.** Efficient and mode selective spatial mode multiplexer based on multi-plane light conversion. *Optics express*, 2014, vol. 22 (13), 15599-15607
- **FONTAINE, N. K.** ; **RYF, R.** ; **CHEN, H.** ; **NEILSON, D. T.** ; **KIM, K.** ; **CARPENTER, J.** Laguerre-Gaussian mode sorter. *Nature communications*, 2019, vol. 10 (1), 1865
- **URATA, R.** ; **LIU, H.** ; **YASUMURA, K.** ; **MAO, E.** ; **BERGER, J.** ; **ZHOU, X.** ; **VAHDAT, A.** Mission Apollo: Landing optical circuit switching at datacenter scale. *arXiv preprint arXiv:2208.10041*, 2022
- Blast: Accelerating high-performance data analytics applications by optical multicast. **XIA, Y.** ; **NG, T. E.** ; **SUN, X. S.** 2015 IEEE Conference on Computer Communications (INFOCOM). IEEE., April 2015, 1930-1938
- **DAS, S.** ; **RAHBAR, A.** ; **WU, X. C.** ; **WANG, Z.** ; **WANG, W.** ; **CHEN, A.** ; **NG, T. E.** Shufflecast: An optical, data-rate agnostic and low-power multicast architecture for next-generation compute clusters. *IEEE/ACM Transactions on Networking*, 2022
- **SAMADI, P.** ; **GUPTA, V.** ; **XU, J.** ; **WANG, H.** ; **ZUSSMAN, G.** ; **BERGMAN, K.** Optical multicast system for data center networks. *Optics express*, 2015, vol. 23 (17), 22162-22180